# EUROPEAN PATENT SPECIFICATION

(11) **EP 3 344 370 B1**
(45) Date of publication and mention of the grant of the patent: **07.08.2024**
(21) Application number: 16757411.0
(22) Date of filing: 10.08.2016
(51) Int. Cl.: B01D 53/04, B01D 53/047, B01D 53/26, C10L 3/10

(54) **APPARATUS AND SYSTEM FOR COMBINED RAPID CYCLE TEMPERATURE AND PRESSURE SWING ADSORPTION PROCESSES RELATED THERETO**
VORRICHTUNG UND SYSTEM FÜR KOMBINIERTE RAPID-CYCLE-TEMPERATUR UND DAMIT VERBUNDENE DRUCKWECHSELADSORPTIONSPROZESSE
APPAREIL ET SYSTÈME POUR PROCESSUS COMBINÉS D'ADSORPTION MODULÉE EN TEMPÉRATURE ET MODULÉE EN PRESSION À CYCLES RAPIDES

(30) Priority: 02.09.2015 US 201562213270 P
(43) Date of publication of application: 11.07.2018
(73) Proprietor: ExxonMobil Technology and Engineering Company, Spring, TX 77389 (US)
(72) Inventor: MARSHALL, Bennett, D., Conroe, TX 77384 (US); KELLEY, Bruce, T., Porter, TX 77365 (US); NAGAVARAPU, Ananda, K., Houston, TX 77007 (US); DECKMAN, Harry, W., Clinton, NJ 08809 (US); JOHNSON, Robert, A., Doylestown, PA 18902 (US); RAMKUMAR, Shwetha, Cypress, TX 77433 (US); OELFKE, Russell, H., Houston, TX 77084 (US)
(74) Representative: ExxonMobil Chemical Europe LLC
(86) International application number: PCT/US2016/046369
(87) International publication number: WO 2017/039990

(56) References cited:
- WO-A1-2013/022529
- US-A- 5 486 227
- US-A1- 2008 282 887
- US-A1- 2012 312 163
- US-A1- 2014 083 294

## Description

### FIELD

The present techniques relate to a system associated with a combined temperature swing adsorption (TSA) and pressure swing adsorption (PSA) process. In particular, the system includes a combined TSA and PSA process for treating of pipeline quality natural gas to liquefied natural gas (LNG) specifications.

### BACKGROUND

Gas separation is useful in many industries and can typically be accomplished by flowing a mixture of gases over an adsorbent material that preferentially adsorbs one or more gas components while not adsorbing one or more other gas components. The non-adsorbed components are recovered as a separate product.

One particular type of gas separation technology is swing adsorption, such as temperature swing adsorption (TSA), pressure swing adsorption (PSA), partial pressure swing adsorption (PPSA), rapid cycle temperature swing adsorption (RCTSA), rapid cycle pressure swing adsorption (RCPSA), rapid cycle partial pressure swing adsorption (RCPPSA), and not limited to but also combinations of the fore mentioned processes, such as pressure and temperature swing adsorption. As an example, PSA processes rely on the phenomenon of gases being more readily adsorbed within the pore structure or free volume of an adsorbent material when the gas is under pressure. That is, the higher the gas pressure, the greater the amount of readily-adsorbed gas adsorbed. When the pressure is reduced, the adsorbed component is released, or desorbed from the adsorbent material.

The swing adsorption processes (e.g., PSA and/or TSA) may be used to separate gases of a gas mixture because different gases tend to fill the micropore of the adsorbent material to different extents. For example, if a gas mixture, such as natural gas, is passed under pressure through a vessel containing an adsorbent material that is more selective towards carbon dioxide than it is for methane, at least a portion of the carbon dioxide is selectively adsorbed by the adsorbent material, and the gas exiting the vessel is enriched in methane. When the adsorbent material reaches the end of its capacity to adsorb carbon dioxide, it is regenerated by reducing the pressure, thereby releasing the adsorbed carbon dioxide. Then, the adsorbent material is typically purged and repressurized prior to starting another adsorption cycle.

The swing adsorption processes typically involve adsorbent bed units, which include adsorbent beds disposed within a housing and configured to maintain fluids at various pressures for different steps in a cycle within the unit. These adsorbent bed units utilize different packing material in the bed structures. For example, the adsorbent bed units utilize checker brick, pebble beds or other available packing. As an enhancement, some adsorbent bed units may utilize engineered packing within the bed structure. The engineered packing may include a material provided in a specific configuration, such as a honeycomb, ceramic forms or the like.

Further, various adsorbent bed units may be coupled together with conduits and valves to manage the flow of fluids through the cycle. Orchestrating these adsorbent bed units involves coordinating the steps in the cycle for each of the adsorbent bed units with other adsorbent bed units in the system. A complete cycle can vary from seconds to minutes as it transfers a plurality of gaseous streams through one or more of the adsorbent bed units.

Conventional processes are used to treat hydrocarbon containing streams containing CO₂ to prepare the stream for LNG specifications. For example, a typical LNG specification requires the CO₂ content to be less than 50 parts per million molar (ppm). Such stringent specifications are not applied on natural gas streams in typical pipeline networks. For example, the CO₂ content for pipeline gas in a pipeline stream can be as high as 2% by volume. As such, for LNG facilities that use the pipeline gas as the raw feed, additional treatment steps may be necessary. For gas containing less than a few hundred ppm of CO₂, a conventional pressure or temperature swing adsorption process may be used. However, as the CO₂ content in the gas stream increases, this process becomes economically unviable. For gas containing higher amounts of CO₂, an amine-solvent based separation system is commonly used. Such amine-solvent based separation systems have large foot print and weight, and involve large capital investments. Additionally, these systems involve the use of solvents, which have to be replenished as part of the process. Furthermore, the process requires a large molecular sieve unit to dehydrate the gas downstream of the amine separation system, as the gas is at water saturation conditions.

US 2012/0312163 A1 describes a method that relates to a temperature swing adsorption process for the removal of a target species, such as an acid gas, from a gas mixture, such as a natural gas stream. The temperature swing adsorption process involves an adsorption step, externally heating the adsorbent bed to a second temperature higher than the first temperature while simultaneously passing a flow of purge gas to desorb and recover at least a portion of the desorbed target species.

US 2014/0083294 A1 describes a temperature swing adsorption process for the purification of synthetic gas aiming for fractions enriched with H₂ and/or CO, wherein the process comprises an adsorption step, a regeneration step using a regeneration gas including > 95 mol% of nitrogen and a scavenging step using a scavenging gas corresponding to a fraction of the synthetic gas to be purified or a fraction of the purified synthetic gas.

US 5,486,227 A describes a process integrating temperature swing adsorption (TSA), pressure swing adsorption (PSA) and cryogenic distillation to optimize overall performance in purifying and liquefying a feed gas mixture containing a less strongly adsorbed component of lower volatility.

Unfortunately, conventional processes for processing LNG streams have certain limitations. With LNG operations, the size and weight of the conventional system may be problematic, which is further compounded for floating facilities. The excessive weight and footprint for conventional systems add to the complexity of the floating facility and increase the size of the facilities. Also, the additional size and complexity increase the capital investment costs along with the operating costs for the floating facilities. Further, as conventional processes use of solvents or other such materials that require frequent replenishment, the operating costs and complexity are increased. This aspect is further compounded if the floating facilities is remotely located and is difficult to access and resupply.

Accordingly, there remains a need in the industry for apparatus, methods, and systems that provided enhancements to the processing of feed streams into a LNG system. Further, a need exists for a reduction in cost, size, and weight of facilities for treatment of pipeline quality streams prior to liquefaction, which may be provided to a LNG system that has to comply with LNG specifications.

### SUMMARY OF THE INVENTION

The present invention is concerned with a process as defined in claim 1 and a system as defined in claim 10. In one or more embodiments according to the present invention, the present techniques comprise a process for removing contaminants from a gaseous feed stream, the process comprising: a) performing one or more adsorption steps, wherein each of the one or more adsorption steps comprise passing a gaseous feed stream through an adsorbent bed unit having an adsorbent bed to separate one or more contaminants from the gaseous feed stream to form a product stream; b) performing one or more depressurization steps, wherein the pressure within the adsorbent bed unit is reduced by a predetermined amount with each successive depressurization step; c) performing a heating step, wherein the heating step comprises passing a heating stream at a heating temperature into the adsorbent bed unit, wherein the heating stream is passed in a countercurrent direction relative to the direction of the feed stream and the heating temperature is less than 500 °F (260 °C) (e.g., which may heat only a portion of the bed), wherein the heating step results in a temperature differential in a range between 50 °F (27.8 °C) and 400 °F (222.2 °C), wherein the temperature differential is the difference in temperatures between a feed end of the adsorbent bed and a product end of the adsorbent bed, wherein passing the heating stream at the heating temperature into the adsorbent bed unit further comprises recycling the heating stream through the adsorbent bed via a heating loop, wherein the heating stream is passed to a heating unit to increase the temperature of the heating stream prior to passing the heating stream at the heating temperature into the adsorbent bed unit, and wherein the heating loop includes a blower in fluid communication with the heating unit to increase the pressure of the heating stream prior to passing the heating stream to the adsorbent bed unit; d) performing a purge step, wherein the purge step comprises passing a purge stream into the adsorbent bed unit, wherein the purge stream is passed in a countercurrent direction relative to the direction of the feed stream; and e) repeating the steps a) to d) for at least one additional cycle, wherein the cycle duration is for a period greater than 1 second and less than 600 seconds; wherein the process further comprises: passing the product stream from the adsorbent bed unit to a liquefied natural gas process unit; separating a flash fuel stream from the product stream in the liquefied natural gas process unit; and combining a portion of the heating stream with the outlet purge stream that is passed through the adsorbent bed unit to provide a process fuel gas stream, wherein the purge stream is provided from one of a portion of the flash fuel stream or a combination of a portion of the flash fuel stream with a boil off gas stream. The temperature differential is in a range between 125 °F (69.4 °C) and 350 °F (194.4 °C) or in a range between 175 °F (97.2 °C) and 300 °F (166.7 °C).

In yet another embodiment according to the present invention, a system for removing contaminants from a gaseous feed stream is described. The system comprising: an adsorbent bed unit, a liquefied natural gas process unit, one or more purge units and a heating mechanism. The adsorbent bed unit is configured to separate contaminants from a gaseous feed stream and to output a product stream, wherein the adsorbent bed unit comprises an adsorbent bed, while the liquefied natural gas process unit is in fluid communication with the adsorbent bed unit and is configured to receive the product stream and separate the product stream into a final product stream and a flash fuel stream. The one or more purge units are in fluid communication with the liquefied natural gas process unit and configured to provide a purge stream to the adsorbent bed unit, wherein the purge stream is provided from one of a portion of the flash fuel stream or a combination of a portion of the flash fuel stream with a boil off gas stream. The heating mechanism is in fluid communication with the adsorbent bed unit, wherein the heating mechanism is a heating loop that includes a heating unit configured to heat the heating stream prior to passing the heating stream to the adsorbent bed unit, wherein the heating loop includes a blower in fluid communication with the heating unit and configured to increase the pressure of the heating stream prior to passing the heating stream to the adsorbent bed unit, and wherein the heating mechanism is configured to: pass a heating stream at a heating temperature into the adsorbent bed unit to create a temperature differential in a range between 50 °F (27.8 °C) and 400 °F (222.2 °C), wherein the temperature differential is the difference in temperatures between a feed end of the adsorbent bed and a product end of the adsorbent bed; and combine a portion of the heating stream with the purge stream that is passed through the adsorbent bed unit to provide a fuel gas stream. The heating mechanism is a heating loop. The one or more purge units may comprise one or more compressors configured to compress one of the flash fuel stream, a boil off gas stream and any combination thereof.

### BRIEF DESCRIPTION OF THE FIGURES

The foregoing and other advantages of the present disclosure may become apparent upon reviewing the following detailed description and drawings of non-limiting examples of embodiments.
Figure 1 is a three-dimensional diagram of the swing adsorption system with six adsorbent bed units and interconnecting piping in accordance with an embodiment of the present techniques.
Figure 2 is a diagram of a portion of an adsorbent bed unit having associated valve assemblies and manifolds in accordance with an embodiment of the present techniques.
Figure 3 is a diagram of a conventional system for treating of a feed stream to form a liquefied natural gas (LNG) stream.
Figure 4 is an exemplary diagram of a system for treating of a feed stream to form a LNG stream in accordance with an embodiment of the present techniques.
Figures 5A, 5B, 5C, 5D and 5E are exemplary diagrams associated with the configuration in Figure 4 in accordance with an embodiment of the present techniques.
Figures 6A, 6B and 6C are exemplary diagrams associated with a heating loop and associated adsorbent bed units in accordance with an embodiment of the present techniques.
Figure 7 is another exemplary diagram of a system for treating of a feed stream to form a LNG stream in accordance with an embodiment of the present techniques.
Figure 8 is yet another exemplary diagram of a system for treating of a feed stream to form a LNG stream in accordance with an embodiment of the present techniques.

### DETAILED DESCRIPTION OF THE INVENTION

Unless otherwise explained, all technical and scientific terms used herein have the same meaning as commonly understood by one of ordinary skill in the art to which this disclosure pertains. The singular terms "a," "an," and "the" include plural referents unless the context clearly indicates otherwise. Similarly, the word "or" is intended to include "and" unless the context clearly indicates otherwise. The term "includes" means "comprises." In case of conflict as to the meaning of a term or phrase, the present specification, including explanations of terms, control. Directional terms, such as "upper," "lower," "top," "bottom," "front," "back," "vertical," and "horizontal," are used herein to express and clarify the relationship between various elements. It should be understood that such terms do not denote absolute orientation (e.g., a "vertical" component can become horizontal by rotating the device). The materials, methods, and examples recited herein are illustrative only and not intended to be limiting.

As used herein, "stream" refers to fluid (e.g., solids, liquid and/or gas) being conducted through various equipment. The equipment may include conduits, vessels, manifolds, units or other suitable devices.

As used herein, volume percentage is based on standard conditions. The standard conditions for a method may be normalized to the temperature of 0 °C (e.g., 32 °F) and absolute pressure of 100 kiloPascals (kPa) (1 bar).

As used herein, "conduit" refers to a tubular member forming a channel through which something is conveyed. The conduit may include one or more of a pipe, a manifold, a tube or the like.

The provided processes, apparatus, and systems of the present techniques may be used to remove contaminants (CO₂, H₂O, and H₂S) from feed streams, such as hydrocarbon containing streams. As may be appreciated and as noted above, the hydrocarbon containing feed streams may have different compositions. For example, hydrocarbon feed streams vary widely in amount of acid gas, such as from several parts per million acid gas to 90 volume percent (vol.%) acid gas. Non-limiting examples of acid gas concentrations from exemplary gas reserves sources include concentrations of approximately: (a) 4 ppm H₂S, 2 vol.% CO₂, 100 ppm H₂O (b) 4 ppm H₂S, 0.5 vol.% CO₂, 200 ppm H₂O (c) 1 vol.% H₂S, 2 vol.% CO₂, 150 ppm H₂O, (d) 4 ppm H₂S, 2 vol.% CO₂, 500 ppm H₂O, and (e) 1 vol.% H₂S, 5 vol.% CO₂, 500 ppm H₂O. Further, in certain applications the hydrocarbon containing stream may include predominately hydrocarbons with specific amounts of CO₂ and/or water. For example, the hydrocarbon containing stream may have greater than 0.00005 volume percent CO₂ based on the total volume of the gaseous feed stream and less than 2 volume percent CO₂ based on the total volume of the gaseous feed stream; or less than 10 volume percent CO₂ based on the total volume of the gaseous feed stream. The processing of feed streams may be more problematic when certain specifications have to be satisfied. Accordingly, the present techniques provide configurations and processes that are utilized to enhance the separation of contaminants from a feed stream to form a liquefied natural gas (LNG) stream that complies with LNG specifications. For example, natural gas feed streams for liquefied natural gas (LNG) applications have stringent specifications on the CO₂ content to ensure against formation of solid CO₂ at cryogenic temperatures. The LNG specifications may involve the CO₂ content to be less than or equal to 50 ppm. Such specifications are not applied on natural gas streams in pipeline networks, which may involve the CO₂ content up to 2 vol.% based on the total volume of the gaseous feed stream. As such, for LNG facilities that use the pipeline gas (e.g., natural gas) as the raw feed, additional treating or processing steps are utilized to further purify the stream. Further, the present techniques may be used to lower the water content of the stream to less than 0.1 ppm.

The product stream, which may be the LNG feed stream, may have greater than 98 volume percent hydrocarbons based on the total volume of the product stream, while the CO₂ and water content are below certain thresholds. The LNG specifications may involve the CO₂ content to be less than or equal to 100 ppm or preferably less than or equal to 50 ppm, while the water content of the stream may be less than 0.1 ppm.

In certain embodiments, the system utilizes a combined swing adsorption process, which combines TSA and PSA, for treating of pipeline quality natural gas to remove contaminants for the stream to satisfy LNG specifications. The process utilizes adsorbent bed units (e.g., each having parallel channel adsorbent beds), wherein the adsorbent bed units are partially depressurized and heated using a heating loop at a heating temperature and a purge stream at a purge temperature for thermally assisted partial pressure desorption. Then, the feed stream is used to cool the adsorbent bed during the adsorption step of the cycle. In particular, a rapid cycle swing adsorption process is used to treat natural gas that is at pipeline specifications (e.g., a feed stream of predominately hydrocarbons along with less than or equal to about 2 molar % CO₂ and/or less than or equal to 4 ppm H₂S) to form a stream satisfying the LNG specifications (e.g., less than 100 ppm or even 50 ppm CO₂ and less than about 4 ppm H₂S). By way of example, the gaseous feed stream may include hydrocarbons and CO₂, wherein the CO₂ content is in the range of one hundred parts per million volume and less than or equal to about 5 molar % of the gaseous feed stream or in the range of two hundred parts per million volume and less than or equal to about 2 molar % of the gaseous feed stream. The heating step may also provide some additional purge by removing one or more contaminants from the adsorbent bed.

As compared to the conventional amine-solvent based separation system, the present techniques provide various enhancements. The present techniques may involve performing rapid cycles swing adsorption (e.g., performing the cycle in minutes instead of hours) and/or may involve the use of open parallel channel adsorbent bed structures, which provide a mechanism for higher gas flows at reduced pressure drops (e.g., providing more rapid flows during the heating and adsorption steps) to provide the flexibility to handle the higher levels of CO₂. Further, the adsorbent bed units may be more compact because of the use of a rapid cycle swing adsorption process. As a result, the configuration may lessen the footprint and lower capital investment as compared to a conventional amine-solvent based separation system. Accordingly, higher CO₂ concentrations may be reduced to the LNG target specifications in a more economical manner, and with smaller footprint and less weight than conventional molecular sieve units may provide.

Further, as compared to the conventional TSA adsorption system, the present techniques provide various enhancements. For example, one of the enhancements of the present techniques is that it may extend the economically viable operating envelope of an adsorbent based temperature and/or pressure swing adsorption process for such gas treatment. In particular, the present techniques may extend to higher levels of the CO₂ concentrations than may be handled by a conventional TSA adsorption systems. Indeed, the present techniques provide a system that addresses the large size and poor economics of conventional systems.

In one or more embodiments, the present techniques provide a unique combination of rapid cycle temperature and pressure swing adsorption to provide the necessary separation. For example, in an adsorption or feed step, pipeline quality feed gas may be introduced as a feed stream into an adsorbent bed containing an adsorbent material chosen to preferentially adsorb CO₂. Then, the gas stream exiting the adsorbent bed, which is the product stream, is at LNG specification (e.g., containing less than 100 ppm of CO₂ or less than 50 ppm of CO₂). As the adsorbent bed nears saturation, the feed stream is interrupted and diverted to a different adsorbent bed, and the current adsorbent bed is regenerated in a regeneration step. The regeneration step may include one or more depressurization steps, such as one or more purge steps and/or one or more blowdown steps, where the pressure within the housing of the adsorbent bed is reduced for each subsequent step. The regenerations step results in desorption of some of the methane gas that co-adsorbed with CO₂ during the adsorption step. The blowdown output stream is typically of high purity and can be compressed to mix with the product stream which is at LNG specifications. Alternatively, if there is a higher amount of CO₂ in this stream, then it can be compressed to mix with the feed stream.

Next the adsorbent bed is subjected to a heating step at the lower pressure. This heating step represents a combination of partial pressure swing adsorption and temperature swing adsorption to facilitate regeneration of the adsorbent bed. The heating step may be provided in several manners, such as electrical heating of the metal substrate in the adsorbent bed, passing a heating stream through the adsorbent bed and/or convective heating from a hermetically sealed heating fluid. When the heating step is performed at low pressure, the concentration of CO₂ in this stream should be lessened, as it distributes over the adsorbent bed. In the certain embodiments, the heating step may involve mixing the outlet purge stream (e.g., the product of the purge stream) with the heating loop stream and then conducting away the combined stream for fuel. Alternatively, the heating loop may be performed at high pressure and temperature with a stream of predominantly CO₂. In such configuration, the blowdown step may be performed at atmospheric pressure with the blowdown stream conducted away for fuel (not product), and then the adsorbent bed may be purged. However, the preferred cycle may involve limiting the amount of CO₂ in the heating stream (e.g., to less than about 20 molar %).

In certain aspects, as described further below, the present techniques may involve using a high temperature heating loop to heat the adsorbent bed for the combined swing adsorption process, which are performed at a heating temperature and a heating pressure. The heating temperature may be less than 500 °F (260 °C), less than 450 °F (232.2 °C) or may be less than 400 °F (204.4 °C), and may be greater than 100 °F (55.6 °C) of the feed temperature, greater than 150 °F (83.3 °C) of the feed temperature or greater than 200 °F (111.1 °C) of the feed temperature. The heating pressure may be in the range between 0.01 bara and 100 bara, between 1 bara and 80 bara, or between 2 bara and 50 bara. The heating loop may include conduits and manifolds that provide a fluid path for the heating stream through a storage tank, a heating unit (furnace and/or heat exchanger), and blower or compressor to fluidly communication with one or more adsorbent beds. The heating stream may contain predominantly methane (e.g., heating stream) along with CO₂ or other contaminants. As the adsorbent bed is heated, at least a portion of the CO₂ adsorbed in the adsorbent bed is released, which mixes with the heating stream and is conducted away from the adsorbent bed into the flow of the heating loop. This step removes a significant amount of CO₂ that is adsorbed in the adsorbent bed, in some applications may be up to 85 molar % of the total adsorbed CO₂. Further, the heating pressure being lower also enhances the removal of the CO₂ from the adsorbent bed.

The heating step may not heat the entire length of the adsorbent bed to minimize any contaminant breakthrough. Because the adsorbent bed is cooled by certain streams and reactions, the temperature differential may provide for an adsorption wave to form at the feed end (e.g., front of the cooled adsorbent bed) and then moves in the feed direction along the adsorbent bed. As the adsorption front is forming in the front of the adsorbent bed (e.g., near the feed end), the remainder of the adsorbent bed is cooled by the feed prior to the adsorption front advancing to that point. This provides a mechanism for the process to produce LNG quality gas in the initial second or so of feed. For example, the heating step may be configured to result in a temperature differential between the feed end and the product end of the adsorbent bed. The temperature differential is the difference in temperatures between a feed end of the adsorbent bed and a product end of the adsorbent bed, which may be calculated by subtracting the temperature at the product end of the adsorbent bed from the temperature at the feed end of the adsorbent bed. The temperatures may be the measured temperatures by a thermocouple or other temperature measurement device. The feed end or feed side is the end of the adsorbent bed that the feed stream initially enters, while the product end is the portion of the adsorbent bed opposite from the feed end and where the feed stream exits the adsorbent bed. The temperature differential may range between 50 °F (27.8 °C) and 400 °F (222.2 °C), range between 100 °F (55.6 °C) and 400 °F (222.2 °C), range between 125 °F (69.4 °C) and 350 °F (194.4 °C) or range between 175 °F (97.2 °C) and 300 °F (166.7 °C). The temperature differential may be utilized to have the feed stream enter the adsorbent bed from the feed end and remove contaminants (e.g., CO₂ and/or water) prior to being exposed to the higher temperature portion of the adsorbent bed. The lower temperature portion of the adsorbent bed may be referred to as the heating feed region, the portion of the adsorbent bed that is at the heating temperature may be referred to as the heating product region and the portion of the adsorbent bed that transitions from the heating feed region to the heating product region (e.g., portion with the heating front that increases between the temperature differential of these regions) may be referred to as the heating front region. These different regions may vary as the heating step is being performed with the end of the heating step being the maximum heating product region and minimal heating feed region. The heating feed region may be a specific portion of the adsorbent bed from the feed end of the adsorbent bed to 2% of the bed length, from the feed end of the adsorbent bed to 5% of the bed length, from the feed end of the adsorbent bed to 10% of the bed length or from the feed end of the adsorbent bed to 20% of the bed length. The heating product region may be a specific portion of the adsorbent bed from the product end of the adsorbent bed to 60% of the bed length, from the product end of the adsorbent bed to 55% of the bed length or from the product end of the adsorbent bed to 50% of the bed length. Further, the heating step may include heating a portion of the adsorbent bed from a product end of the adsorbent bed to be within a certain range around the heating temperature (e.g., 10% of the heating temperature and/or within 5% of the heating temperature). The movement of the cooling front is toward to the product end during the adsorption step and toward the feed end during the heating step.

Next, the adsorbent bed is purged with a purge stream provided at a purge temperature and purge pressure. The purge stream may be a high purity methane stream, which may be provided from downstream processing equipment. For example, the purge stream may be the flash fuel gas sourced from the LNG liquefaction process, which is usually a purified stream (e.g., predominantly methane, but may include nitrogen less than 40%). This purge stream may be used to remove at least a portion of the remaining CO₂ that is adsorbed in the adsorbent bed, thus completing the regeneration of the adsorbent bed. The purge output stream exiting the adsorbent bed may be mixed with the heating stream in the heating loop. From this heating loop, a fuel stream may be drawn out of this heating loop to maintain mass balances and remove a portion of the CO₂ from the heating stream and the process.

Further, the present techniques may not remove all of the CO₂ adsorbed in the bed during the regeneration step, but remove a portion of the CO₂ such that the product end of the adsorbent bed has a CO₂ loading sufficiently low to provide a product stream with less than 50 ppm CO₂. Accordingly, the product end of the adsorbent bed may be maintained nearly free of CO₂ (e.g., the CO₂ loading for the region near the product end is less than 1 millimole per gram (mmol/g), less than 0.5 mmol/g or less than 0.1 mmol/g). The loading level of CO₂ may be lower on the feed side of the adsorbent bed during the purge step, but the length of adsorbent bed that contains CO₂ is reduced during the purge step. For example, a feed region may be a specific portion of the adsorbent bed from the feed end of the adsorbent bed to 10% of the bed length, from the feed end of the adsorbent bed to 25% of the bed length or from the feed end of the adsorbent bed to 40% of the bed length. The product region may be a specific portion of the adsorbent bed from the product end of the adsorbent bed to 10% of the bed length, from the product end of the adsorbent bed to 25% of the bed length or from the product end of the adsorbent bed to 40% of the bed length. The movement of the CO₂ front back during purge step and forward during the adsorption step is the basis of the swing capacity of the process. In part, this is achieved by using a limited, cost effective quantity of purge gas in the purge steam along with the heating of the adsorbent bed in this process and configuration.

Subsequently, the adsorbent bed is repressurized back to the feed pressure and the cycle is repeated. The repressurization of the adsorbent bed may be used without a cooling loop. The purge step and heating step may heat the adsorbent bed and the adsorption step may be used to cool the adsorbent bed, which enhances the efficiency of the system by removing the need for a separate cooling loop.

The present techniques may involve using two or more adsorbent beds, which are operated on similar cycle that are performing different steps of the cycles (e.g., not synchronized with each other) to maintain a steady flow of fluids for the various streams (e.g., feed stream, product stream, heating stream, and purge stream).

Further, in other embodiments, the pressure of the different streams may be varied. For example, the feed stream may involve a feed pressure that ranges range between 40 bar absolute (bara) and 150 bara, between 50 bara and 150 bara, or preferably between 50 bara and 100 bara, but is not necessarily limited to this range. The feed temperature may be in the range between -40 °F (-40 °C) and 200 °F (93.3 °C), in the range between 0 °F (-17.8 °C) and 200 °F (93.3 °C), in the range between 20 °F (-6.7 °C) and 175 °F (79.4 °C) or in the range between 40 °F (4.4 °C) and 150 °F (65.6 °C). The blowdown pressure, heating pressure, and purge pressure may be adjusted depending on the cycle, may depend upon the adsorbent material being utilized and/or may range from vacuum to feed pressure. For example, if the adsorbent material is zeolite 4A, the blowdown pressure range may be between 0.01 bara to 45 bara, or more preferably in a range between 1 bara and 25 bara. This example may depend on the feed concentration of CO₂. Also, in other embodiments, the depressurization steps may be adjusted such that the pressure swing is achieved in stages to vary the amount of methane desorbing during each step, if any. Additionally, the heating pressure in the heating loop may be operated at a pressure different from the purge pressure or blowdown pressure in the respective steps. Also, certain embodiments may include no pressure swing, but may rely upon temperature swing for the regeneration step. Similarly, in the other embodiments, no temperature swing may be performed and the regeneration step may be performed by pressure swing.

In yet other embodiments, the present techniques may be integrated with other processes, such as control freeze zone (CFZ) applications, cryogenic Natural Gas Liquid (NGL) recovery applications, and other such applications. Each of these different applications may include different specifications for the feed stream in the respective process. For example, variants of the present techniques may be used to treat gases containing higher or lower amounts of CO₂ as compared to LNG specifications or pipeline specifications.

Furthermore, in certain embodiments, the above process may be used to separate any two or more contaminants from the feed stream (e.g., to treat the feed stream, which may be pipeline quality gas, to LNG specifications). For example, if the feed stream includes additional equipment (e.g., dehydration adsorption unit, such as molecular sieve adsorption unit and/or dehydration adsorbent bed unit) to remove water from the stream and may be integrated with the present techniques to further process the stream. For example, a dehydration process may be performed upstream of the CO₂ removal in the adsorbent bed units by dehydration equipment, such as a molecular sieve or a swing adsorption process (e.g., RCPSA and/or RCTSA). In particular, a molecular sieve unit or a first adsorbent bed unit may be used to remove water, while a second adsorbent bed unit may be used to remove CO₂. Alternatively, in another configuration, an integrated rapid cycle adsorption system may be utilized to remove multiple contaminants (e.g., water and CO₂). Suitable adsorbent material or adsorbent layers may be utilized to provide the dehydration, which may be the same or different from the adsorbent material used to in the removal of other contaminants, such as CO₂.

Moreover, the present techniques may include a specific process flow to remove contaminants, such as CO₂ and/or water. For example, the process may include an adsorbent step and a regeneration step, which form the cycle. The adsorbent step may include passing a gaseous feed stream at a feed pressure and feed temperature through an adsorbent bed unit to separate one or more contaminants from the gaseous feed stream to form a product stream. The feed stream may be passed through the adsorbent bed in a forward direction (e.g., from the feed end of the adsorbent bed to the product end of the adsorbent bed). Then, the flow of the gaseous feed stream may be interrupted for a regeneration step. The regeneration step may include one or more depressurization steps, one or more heating steps and one or more purge steps. The depressurization steps, which may be or include a blowdown step, may include reducing the pressure of the adsorbent bed unit by a predetermined amount for each successive depressurization step, which may be a single step and/or multiple steps. The depressurization step may be provided in a forward direction or may preferably be provided in a countercurrent direction (e.g., from the product end of the adsorbent bed to the feed end of the adsorbent bed). The heating step may include passing a heating stream into the adsorbent bed unit, which may be a recycled stream through the heating loop and is used to heat the adsorbent material. For example, the ratio of heating stream (e.g., loop gas) to feed stream (e.g., feed gas) may be based on the type of adsorbent material, the feed concentration of CO₂ in the feed stream, and the frequency of the heating of the adsorbent bed. The temperature of the heating loop leaving the adsorbent bed is lower than the heating loop inlet temperature by at least 50 °F (27.8 °C). For low feed concentrations of CO₂ in the feed stream, the longer duration of adsorbent step may involve less reheating of the adsorbent bed. For example, if the stream has 2 molar % CO₂ in the feed stream, then about 50 volume % to 60 volume % of the feed stream may be used in heating stream, while for 0.5 molar % CO₂ in the feed stream, then about 15 volume % to 25 volume % of the feed stream may be used in the heating stream.

The heating stream, which may be provided at a heating temperature and heating pressure, may be provided in countercurrent flow relative to the feed stream. The purge step may include passing a purge stream into the adsorbent bed unit, which may be a once through purge step and the purge stream may be provided in countercurrent flow relative to the feed stream. The purge stream may be provided at a purge temperature and purge pressure, which may include the purge temperature and purge pressure being similar to the heating temperature and heating pressure used in the heating step. Then, the cycle may be repeated for additional streams. Additionally, the process may include one or more re-pressurization steps after the purge step and prior to the adsorption step. The one or more re-pressurization steps may be performed, wherein the pressure within the adsorbent bed unit is increased with each re-pressurization step by a predetermined amount with each successive re-pressurization step. The cycle duration may be for a period greater than 1 second and less than 600 seconds, for a period greater than 2 seconds and less than 300 seconds, for a period greater than 2 second and less than 180 seconds or for a period greater than 5 second and less than 90 seconds.

In certain embodiment, the present techniques the gasous feed stream may be cooled upstream of the swing adsorption process or upstream of one of the adsorbent bed units. The cooling of the gasous feed stream may be performed upstream of the adsrobent bed unit to increase the capacity of the adsorbent material. For example, a propane chiller may be used to chill the feed gas stream to -20 °C. This may result in an increase in the capacity of the adsorbent.

In one or more embodiments, the swing adsorption system may include one or more purge units in fluid communication with a liquefied natural gas process unit. The purge units may be configured to provide a purge stream to each of the adsorbent bed units, wherein the purge stream is provided from one of a portion of the product stream, the flash fuel stream, a boil off gas stream and any combination thereof. By way of example, the purge units may be or include one or more compressors configured to compress one of the flash fuel stream, a boil off gas stream and any combination thereof. Also, the purge units may be or include one or more pressure reduction devices (e.g., expanders or valve) configured to decompress the portion of the product stream. The portion of the product stream may be from any one of the adsorbent bed units within the swing adsorption system.

In one or more embodiments, the present techniques can be used for any type of swing adsorption process. Non-limiting swing adsorption processes for which the present techniques may be used include pressure swing adsorption (PSA), vacuum pressure swing adsorption (VPSA), temperature swing adsorption (TSA), partial pressure swing adsorption (PPSA), rapid cycle pressure swing adsorption (RCPSA), rapid cycle thermal swing adsorption (RCTSA), rapid cycle partial pressure swing adsorption (RCPPSA), as well as combinations of these processes. For example, the preferred swing adsorption process may include a combined pressure swing adsorption and temperature swing adsorption, which may be performed as a rapid cycle process. Exemplary swing adsorption processes are further described in U.S. Patent Application Publication Nos. 2008/0282892, 2008/0282887, 2008/0282886, 2008/0282885, 2008/0282884 and 20140013955.

By way of example, the swing adsorption process may include specific steps in performing a cycle. The swing adsorption process may include a heating mechanism, which may be configured to pass a heating stream at a heating temperature into the adsorbent bed unit, wherein the heating stream is configured to create a temperature differential in a range between 50 °F (27.8 °C) and 400 °F (222.2 °C), wherein the temperature differential is the difference in temperatures between a feed end of the adsorbent bed and a product end of the adsorbent bed; and may combine a portion of the heating stream with the purge stream that is passed through the adsorbent bed unit. The heating mechanism may include a heating loop that includes a heating unit configured to heat the heating stream prior to passing the heating stream to the adsorbent bed unit. Further, the heating loop may include a blower in fluid communication with the heating unit and configured to increase the pressure of the heating stream prior to passing the heating stream to the adsorbent bed unit. Also, the heating mechanism may comprise one or more conduits and valves that are configured to pass a purge product stream from a second adsorbent bed unit through the adsorbent bed unit.

As a first example, the swing adsorption process may include (i) an adsorption step to pass the gaseous feed stream through the adsorbent bed unit and produce a product stream, (ii) a blow down step to lower the pressure within the adsorbent bed unit and purge contaminants, (iii) a heating step to heat the adsorbent bed, which may involve a heating mechanism (e.g., heating loop, multiple purge steps or other suitable method to heat the adsorbent bed; (iv) a purge step that involves passing a purge stream through the adsorbent bed unit to remove contaminants from the adsorbent bed unit; (v) an optional repressurization step to increase the pressure within the adsorbent bed unit and then the process may repeat to steps (i) to (v) for an additional cycle. As a second example, the swing adsorption process may include one or more purge steps that are used as the heating step. In particular, the method may include (i) an adsorption step to pass the gaseous feed stream through the adsorbent bed unit and produce a product stream, (ii) a blow down step to lower the pressure within the adsorbent bed unit and purge contaminants; (iii) a first purge step to pass a first purge stream through the adsorbent bed unit at a first purge pressure and a first purge pressure (e.g., less than 500 °F (260 °C) or in the range between 50 °F (27.8 °C) above the feed stream and 450 °F (232.2 °C)) to remove contaminants (e.g., a stream from another adsorbent bed purge stream, which may be heated prior to being ), (iv) a second purge step to pass a second purge stream through the adsorbent bed unit at a second purge pressure and a second purge temperature (which may be within the temperature range of the first purge temperature) to remove contaminants (e.g., a stream from another adsorbent bed purge stream); (v) a third purge step to pass a third purge stream through the adsorbent bed unit at a third purge pressure to remove contaminants (e.g., a stream that has not passed through an adsorbent bed); (vi) an optional repressurization step to increase the pressure within the adsorbent bed unit and then the process may repeat to steps (i) to (vi) for an additional cycle. As a third example, the swing adsorption process may include (i) an adsorption step to pass the gaseous feed stream through the adsorbent bed unit and produce a product stream, (ii) a blow down step to lower the pressure within the adsorbent bed unit and purge contaminants; (iii) a first purge step to pass a first purge stream through the adsorbent bed unit at a first purge pressure to remove contaminants, (iv) a second purge step to pass a second purge stream through the adsorbent bed unit at a second purge pressure to remove contaminants, wherein the second purge pressure is lower than the first purge pressure; (v) an optional repressurization step to increase the pressure within the adsorbent bed unit and then the process may repeat to steps (i) to (v) for an additional cycle.

Further still, in one or more embodiments, a variety of adsorbent materials may be used to provide the mechanism for the separations. Examples include zeolite 3A, 4A, 5A, ZK4 and MOF-74. However, the process is not limited to these adsorbent materials, and others may be used as well.

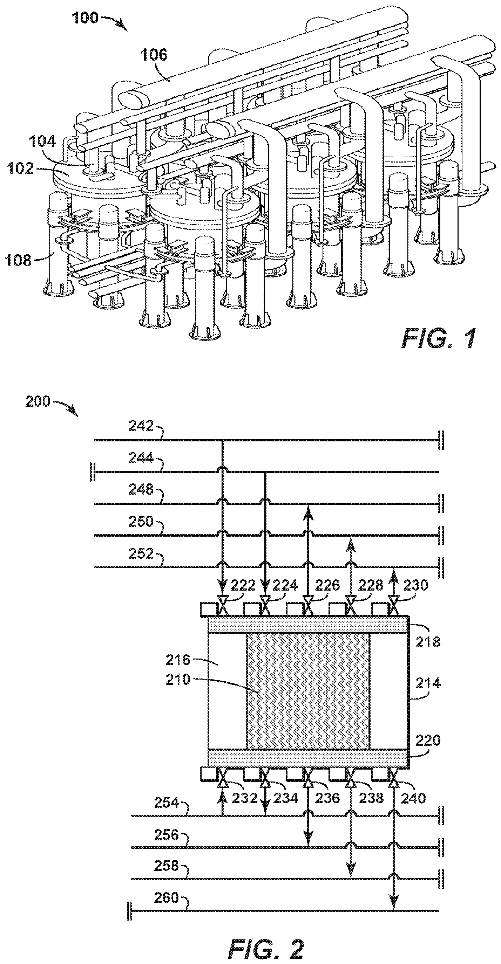

Beneficially, the present techniques provide various enhancements over conventional techniques. For example, the present techniques provide a modular design, which may be configured to lessen the footprint, weight, and capital expense of the system used to treat pipeline gas being used to form an LNG stream that complies with LNG specification. Also, as this process does not use any aqueous medium (e.g., an amine wash), subsequent dehydration steps are minimized or eliminated. Further, the present techniques may lessen or eliminate the use of solvents, which remove solvents from the process. Moreover, the present techniques may include reduced emissions (e.g. eliminates amine regenerator vent) as compared to conventional processes. The present techniques may be further understood with reference to the Figures 1 to 8 below.

Figure 1 is a three-dimensional diagram of the swing adsorption system **100** having six adsorbent bed units and interconnecting piping. While this configuration is a specific example, the present techniques broadly relate to adsorbent bed units that can be deployed in a symmetrical orientation, or non-symmetrical orientation and/or combination of a plurality of hardware skids. Further, this specific configuration is for exemplary purposes as other configurations may include different numbers of adsorbent bed units.

In this system, the adsorbent bed units, such as adsorbent bed unit **102**, may be configured for a cyclical swing adsorption process for removing contaminants from feed streams (e.g., fluids, gaseous or liquids). For example, the adsorbent bed unit **102** may include various conduits (e.g., conduit **104**) for managing the flow of fluids through, to or from the adsorbent bed within the adsorbent bed unit **102**. These conduits from the adsorbent bed units **102** may be coupled to a manifold (e.g., manifold **106**) to distribute the flow to, from or between components. The adsorbent bed within an adsorbent bed unit may separate one or more contaminants from the feed stream to form a product stream. As may be appreciated, the adsorbent bed units may include other conduits to control other fluid steams as part of the process, such as purge streams, depressurizations streams, and the like. In particular, the adsorbent bed units may include a heating loop (not shown), as noted further below, which is used to remove the contaminants from the adsorbent bed. Further, the adsorbent bed unit may also include one or more equalization vessels, such as equalization vessel **108**, which are dedicated to the adsorbent bed unit and may be dedicated to one or more step in the swing adsorption process.

As an example, which is discussed further below in Figure 2, the adsorbent bed unit **102** may include a housing, which may include a head portion and other body portions, that forms a substantially gas impermeable partition, an adsorbent bed disposed within the housing and a plurality of valves (e.g., poppet valves) providing fluid flow passages through openings in the housing between the interior region of the housing and locations external to the interior region of the housing. Each of the poppet valves may include a disk element that is seatable within the head or a disk element that is seatable within a separate valve seat inserted within the head (not shown). The configuration of the poppet valves may be any variety of valve patterns or configuration of types of poppet valves. As an example, the adsorbent bed unit may include one or more poppet valves, each in flow communication with a different conduit associated with different streams. The poppet valves may provide fluid communication between the adsorbent bed and one of the respective conduits, manifolds or headers. The term "in direct flow communication" or "in direct fluid communication" means in direct flow communication without intervening valves or other closure means for obstructing flow. As may be appreciated, other variations may also be envisioned within the scope of the present techniques.

The adsorbent bed comprises a solid adsorbent material capable of adsorbing one or more components from the feed stream. Such solid adsorbent materials are selected to be durable against the physical and chemical conditions within the adsorbent bed unit **102** and can include metallic, ceramic, or other materials, depending on the adsorption process. Further examples of adsorbent materials are noted further below.

Figure 2 is a diagram of a portion of an adsorbent bed unit **200** having valve assemblies and manifolds in accordance with an embodiment of the present techniques. The portion of the adsorbent bed unit **200**, which may be a portion of the adsorbent bed unit **102** of Figure 1, includes a housing or body, which may include a cylindrical wall **214** and cylindrical insulation layer **216** along with an upper head **218** and a lower head **220.** An adsorbent bed **210** is disposed between an upper head **218** and a lower head **220** and the insulation layer **216**, resulting in an upper open zone, and lower open zone, which open zones are comprised substantially of open flow path volume. Such open flow path volume in adsorbent bed unit contains gas that has to be managed for the various steps. The housing may be configured to maintain a pressure from 0 bara (bar absolute) to 150 bara within the interior region.

The upper head **218** and lower head **220** contain openings in which valve structures can be inserted, such as valve assemblies **222** to **240**, respectively (e.g., poppet valves). The upper or lower open flow path volume between the respective head **218** or **220** and adsorbent bed **210** can also contain distribution lines (not shown) which directly introduce fluids into the adsorbent bed **210.** The upper head **218** contains various openings (not show) to provide flow passages through the inlet manifolds **242** and **244** and the outlet manifolds **248**, **250** and **252**, while the lower head **220** contains various openings (not shown) to provide flow passages through the inlet manifold **254** and the outlet manifolds **256**, **258** and **260.** Disposed in fluid communication with the respective manifolds **242** to **260** are the valve assemblies **222** to **240.** If the valve assemblies **222** to **240** are poppet valves, each may include a disk element connected to a stem element which can be positioned within a bushing or valve guide. The stem element may be connected to an actuating means, such as actuating means (not shown), which is configured to have the respective valve impart linear motion to the respective stem. As may be appreciated, the actuating means may be operated independently for different steps in the process to activate a single valve or a single actuating means may be utilized to control two or more valves. Further, while the openings may be substantially similar in size, the openings and inlet valves for inlet manifolds may have a smaller diameter than those for outlet manifolds, given that the gas volumes passing through the inlets may tend to be lower than product volumes passing through the outlets.

In swing adsorption processes, the cycle involves two or more steps that each has a certain time interval, which are summed together to be the cycle time or cycle duration. These steps include regeneration of the adsorbent bed following the adsorption step using a variety of methods including pressure swing, vacuum swing, temperature swing, purging (via any suitable type of purge fluid for the process), and combinations thereof. As an example, a PSA cycle may include the steps of adsorption, depressurization, purging, and re-pressurization. When performing the separation at high pressure, depressurization and re-pressurization (which may be referred to as equalization) may be performed in multiple steps to reduce the pressure change for each step and enhance efficiency. In some swing adsorption processes, such as rapid cycle swing adsorption processes, a substantial portion of the total cycle time is involved in the regeneration of the adsorbent bed. Accordingly, any reductions in the amount of time for regeneration results in a reduction of the total cycle time. This reduction may also reduce the overall size of the swing adsorption system.

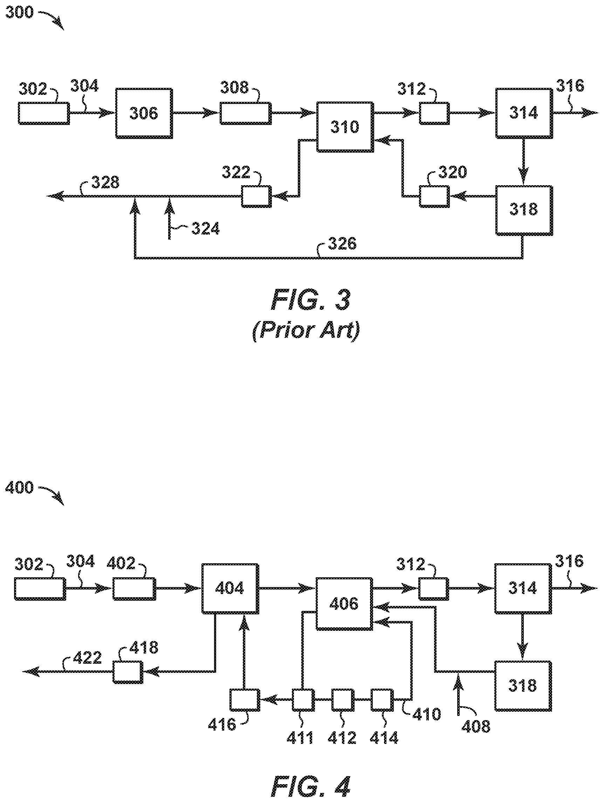

As noted above, conventional systems include amine to remove contaminants from the gas treating process in a liquefaction train. As an example, Figure 3 is a diagram of a conventional system **300** for treating of a feed stream to form a liquefied natural gas (LNG) stream. As shown in the diagram, the system **300** includes various equipment, such as units **302**, **306**, **308**, **310**, **312**, **314**, **318**, **320** and **322,** that are utilized to process a stream into a feed stream in conduit **304** and then into a LNG stream in conduit **316.**

The process begins at a mercury removal unit **302**, which receives a stream and separates mercury from the input stream. The output stream from the mercury removal unit **302** is a feed stream provided via conduit **304** to an amine unit **306.** The amine unit **306** is utilized to separate contaminants from the feed stream. The contaminants may include CO₂ and sulfur containing species. The output from the amine unit **306** is provided to a filter **308.** The filter **308** is configured to remove both particular and liquid droplet carryover from the amine unit **306.** Then, the output from the filter **308** is provided to the molecular sieve unit **310.** The molecular sieve unit **310** is configured to separate additional contaminants, such as water from the stream. The dehydrated output from the molecular sieve unit **310** is conveyed to the LNG process unit **314.** The liquefied natural gas output from the LNG process unit **314** is a final product that may be used for sales, shipment or storage. An additional stream from the LNG process unit **314** may be referred to as the flash fuel stream, flash gas or flash/fuel gas or end flash gas and is a lower pressure high purity methane side stream. The flash fuel stream is conveyed to a fuel gas compressor unit **318.** A portion of the output of the fuel gas compressor unit **318** is heated in a heating unit **320**, which is either a furnace or heat exchanger, and the resulting stream, which is a purge stream, is used to thermally swing the temperature for desorption of the molecular sieve unit **310.** The purge output stream is conducted away from the molecular sieve unit **310**, is cooled in a heat exchanger unit **322.** The cooled purge output stream is combined with the remaining portion of the output of the fuel gas compressor unit **318** from conduit **326.** The resulting stream is conducted away as via conduit **328** for use as a fuel. Additionally, a boil off gas stream may optionally be added to the purge output stream upstream of the conduit **326.**

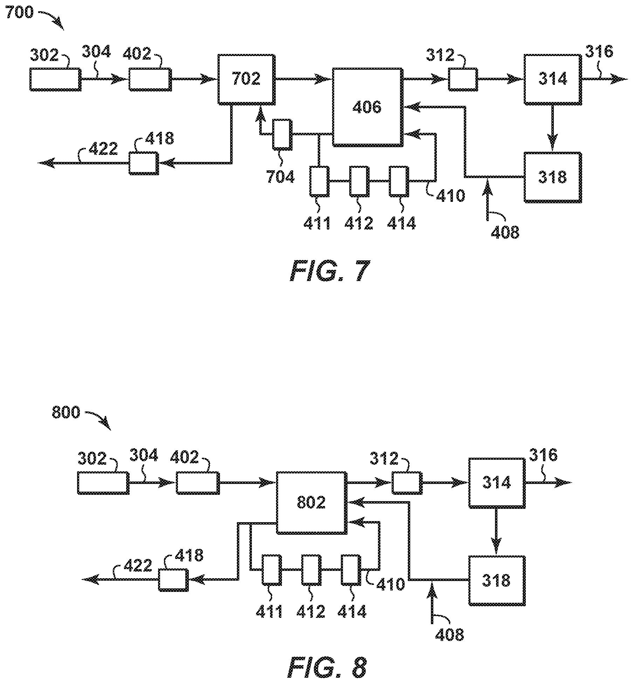

As described above, natural gas feed streams for liquefied natural gas (LNG) applications have stringent specifications on the CO₂ content to ensure against formation of solid CO₂ at cryogenic temperatures. As such, for LNG facilities that use the pipeline gas as the raw feed, additional treating steps may be utilized, such as the present techniques. For example, the present techniques may include a configuration that receives a pipeline quality feed gas, treats the stream in a molecular sieve unit to dehydrate the stream before introduction into the adsorbent bed unit. The adsorbent bed unit may perform a rapid cycle swing adsorption process to remove CO₂ from the stream to satisfy LNG specifications, as shown in Figure 4. Also, in an alternative embodiment, the pipeline gas stream is dehydrated using a rapid cycle swing adsorption process, as shown in Figure 7, while the another alternative embodiment may involve an integrated rapid cycle swing adsorption process to dehydrate and remove CO₂ from the pipeline gas stream to satisfy LNG specifications, as shown in Figure 8.

Figure 4 is an exemplary diagram of a system **400** for treating of a feed stream to form a liquefied natural gas (LNG) stream in accordance with an embodiment of the present techniques. The system includes a molecular sieve unit **404** configured to remove water upstream of an adsorbent bed unit **406** configured to remove CO₂. The adsorbent bed unit **406** may be used to perform a rapid cycle swing adsorption process, which may involve passing various streams through the adsorbent bed unit **406.** As part of this process, a heating step via a heating loop may be used along with a purge step to remove contaminants from the adsorbent bed within the adsorbent bed unit **406.** As may be appreciated, the molecular sieve dehydration unit **404** and adsorbent bed unit **406** may include multiple units to perform the respective processes. Further, the molecular sieve dehydration unit **404** and adsorbent bed unit **406** may each operate with different cycles, which involve adsorption steps and regenerations steps in the respective cycles. Also, as certain equipment or units are similar to those in Figure 3, these units are referenced by the same reference character in this system **400.**

In this system, the process begins at a mercury removal unit **302**, which receives an input stream and separates mercury from the input stream. The output stream from the mercury removal unit **302** is provided via conduit **304** to a filter unit **402**, which is configured to remove any particular matter from the stream. The output stream from the filter unit **402** is the feed stream to the molecular sieve dehydration unit **404**, during its adsorption step. The molecular sieve dehydration unit **404** includes a housing having an adsorbent material disposed within the housing. During the adsorption step, the molecular sieve dehydration unit **404** is configured to lower the water content of the stream to less than 0.1 ppmv by adsorbing the water from the stream into the adsorbent material and passing the remaining portion of the stream out of the adsorbent material and the unit. The dehydrated stream from the molecular sieve dehydration unit **404** is provided to the adsorbent bed unit **406** during its adsorption step. The adsorbent bed unit **406**, which may include one or more of the adsorbent bed units discussed above in Figures 1 and 2, may include a housing with an adsorbent material disposed within the housing. The adsorbent bed unit **406** may be configured to remove at least a portion of the CO₂ from the dehydrated stream (e.g., CO₂ content to be less than 100 ppm or less than 50 ppm) to form the LNG feed stream.

Following the removal of contaminants in units **402**, **404** and **406**, the LNG feed stream is provided for LNG processing in a manner similar to the discussion of Figure 3 above. The LNG feed stream is passed through the heat exchanger **312** and the cooled LNG feed stream is provided to the LNG process unit **314.** From this LNG process unit **314**, a liquefied natural gas stream is provided via conduit **316** and a flash fuel stream is provided to the fuel gas compressor unit **318.**

In this configuration, the system includes a heating step that is combined with a purge step as part of the regeneration step in the cycle for the adsorbent bed unit **406.** The purge stream is formed from the output from the fuel gas compressor unit **318**, which may be combined with a boil off gas stream from conduit **408.** This purge stream is passed to the adsorbent bed unit **406** during the purge step as the purge gas. Alternatively, in other configurations, a portion of the product stream may be used as the purge stream or combined with other streams to be used as the purge stream. A heating stream is formed as a portion of the output stream from the adsorbent bed unit **406**, which is separated into a heating loop **410** (e.g., flow path through heating equipment), which passes through a storage unit **411**, a heating unit **412** and a blower **414.** The storage unit **411** is a vessel that is configured to store the heating stream and to be the source of a portion of the heating stream, and to provide a portion of the heating stream as a fuel gas via a conduit or other equipment (not shown). The heating unit **412** may be a furnace and/or heat exchanger that is configured to increase the temperature of the heating stream and acts as a mechanism to heat the fluids in the heating stream for the regeneration of the adsorbent bed unit **406**, while the blower **414** may be a compressor or other equipment that is configured to increase the pressure of the heating stream and/or to convey the heating stream along the flow path of the heating loop **410.**

The remaining portion of the stream from the adsorbent bed unit **406** and the heated portion that is passed through and outputted from the adsorbent bed unit **406** are combined and passed through a conditioning unit **416** to the molecular sieve dehydration unit **404** for its regeneration step. The conditioning unit **416** may be used to heat the combined stream for regeneration of the molecular sieve dehydration unit **404** and may also be utilized to increase the pressure of the combined stream. In particular, the conditioning unit may be a heat exchange or furnace coupled with a compressor (e.g., a standalone compressor or one or more stages in the fuel gas compressor unit **318**). After the output of heat exchanger unit **418** is used to heat and regenerate the molecular sieve dehydration unit **404**, the regeneration stream exits molecular sieve dehydration unit **404** and is passed to the heat exchanger unit **418.** The heat exchanger unit **418** is configured to condition the stream in heat exchanger unit **418.** Then, the stream from the heat exchanger unit **418** is provided as the process fuel gas stream in conduit **422.**

As noted above, the adsorbent bed units **406** may represent two or more adsorbent bed units, which may each perform a specific sequence of steps as part of the respective cycles. These adsorbent bed units may be used together to manage the flow of fluids in the various streams in the process. These steps may include an adsorption step followed by one or more blowdown steps, one or more heating steps and one or more purge steps and, optionally, one or more repressurization steps. For example, the cycle may have a duration of 90 seconds and involve the following steps: a first hold step for 0.25 seconds, a first blowdown step for 7 seconds, a second hold step for 0.25 seconds, a second blowdown step for 7 seconds, a third hold step for 0.25 seconds, a heating step for 36 seconds, a purge step for 18 seconds, a fourth hold step for 0.25 seconds, a repressurization step for 3 seconds, and an adsorption step for 18 seconds. As may be appreciated, the cycle times may be selected in such a configuration that the purge step, heating step and adsorption step are continuous. In such configurations, two adsorbent bed units are performing the heating step, one adsorbent bed unit is performing the adsorption step, one adsorbent bed unit is performing a purge step and one adsorbent bed unit is performing a repressurization step, a blow down step or a hold between steps.

As an example, the process may involve the adsorbent bed unit **406** representing the use of five adsorbent bed units and containing a total of 1365 kilograms (kg) of zeolite 4A as an adsorbent material, which is distributed as coatings on structured thin walled metal monoliths. In this example, the typical heat capacity of the adsorber bed was 2.5 Joules per gram adsorbent per degree Kelvin (J/g adsorbent/K). The swing adsorption cycle may contain various steps as set forth in Table 1.

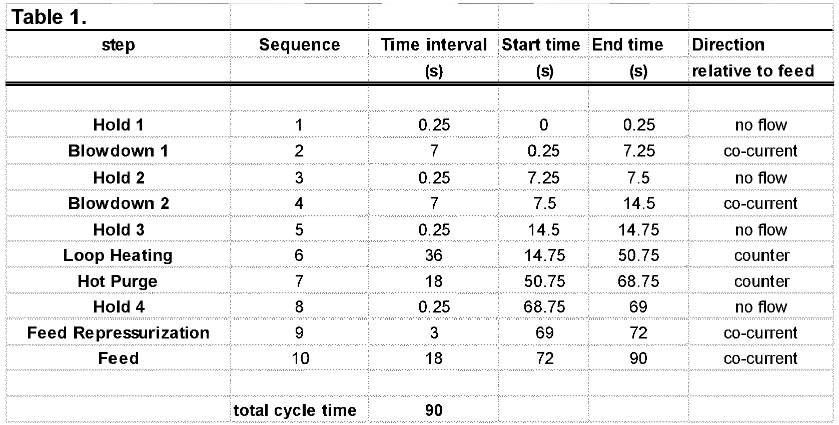

As shown in Table 1, four hold steps are utilized, which are both the front and back ends the adsorbent beds are simultaneously closed to ensure full closure of the entry and exit valves prior to the following a subsequent step. The direction of flow of each step is indicated relative to the direction of flow of the streams during the feed adsorption step. A total cycle of 90 seconds is utilized for each adsorbent bed, with the five adsorbent beds each cycling at different steps to provide near continuous flow of the streams.

In this example, the overall flow rates (in million standard cubic feet per day (MSCFD) and million standard cubic meter per day (MSCMD)), pressures and temperatures of the various streams is described in Table 2, as well as the identification of the various streams relative to the diagram shown in Figure 4. It should be noted that the indicated pressures are the final pressures (e.g., the pressure of a stream at the end of each step). Thus, for example, the purge stream may enter unit **406** at 6 bara, experience pressure drop across the adsorbent bed, and exit the unit at 5 bara as indicated. The temperatures shown for the Feed, Hot Purge, and Loop Heating steps are the initial temperatures of those streams, whereas the temperatures shown for the Product and the two Blowdown steps are the average gas temperatures. For the fuel stream, the temperature indicated is temperature of the combined purge and hot loop streams as contained in storage unit **411.** The BD1 and BD2 streams may be compressed to be provided to the heat exchanger **312.**

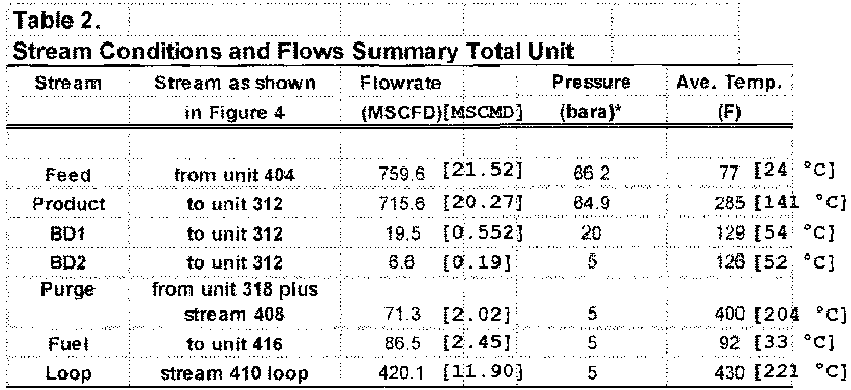

The compositions of the various streams in this example are detailed in Table 3. As shown, the feed contains significant CO₂ and C₂⁺ heavy hydrocarbons, as well as trace levels of N₂ and H₂S. It has been assumed that the preceding molecular sieve unit has reduced water levels in the feed to 0.1 ppm, as shown in Table 3. It may further be seen that the CO₂ concentration is reduced in unit **406** from a feed value of 20,000 ppm (e.g., 2%) to significantly less than 50 ppm, as is desirable for feed into an LNG plant. H₂S levels are also significantly reduced. The removed CO₂ is concentrated and removed from the unit **406** system in the fuel stream.

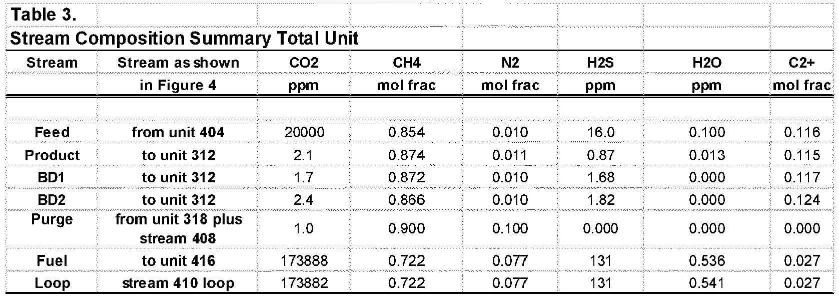

As an alternative embodiment of the system **400**, the filter unit **402** may be utilized in different locations. For example, the filter unit **402** may be disposed upstream of the molecular sieve dehydration unit **404.** In yet another configuration, a filter unit may be disposed upstream of the molecular sieve dehydration unit **404** and downstream of the molecular sieve dehydration unit **404** (e.g., in flow communication with the molecular sieve dehydration unit **404**). In yet another configuration, the purge stream may bypass storage tank **411** and go directly to unit **416.**

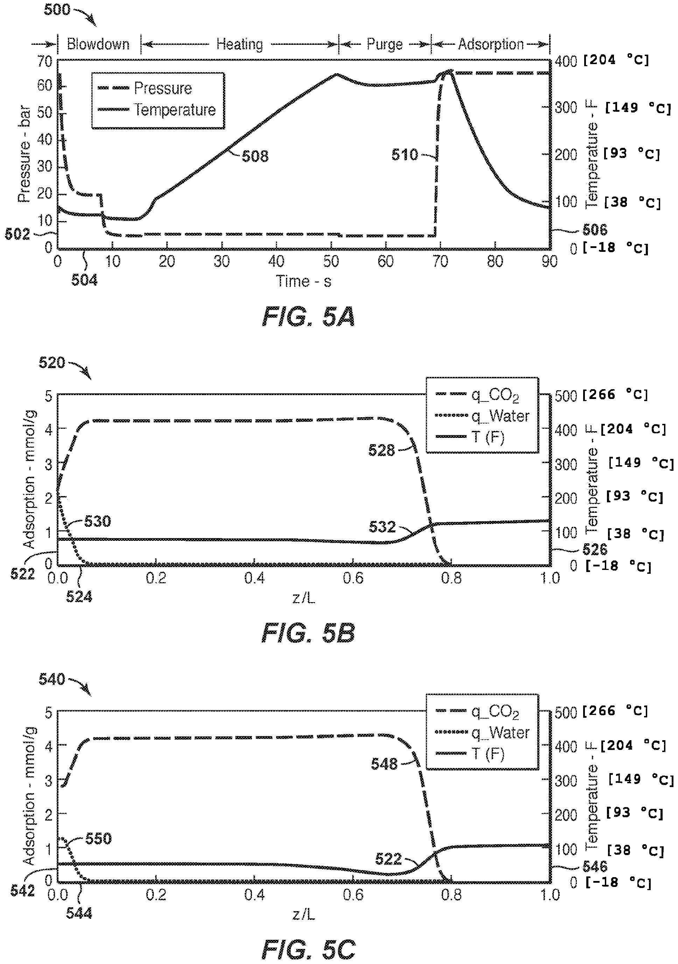

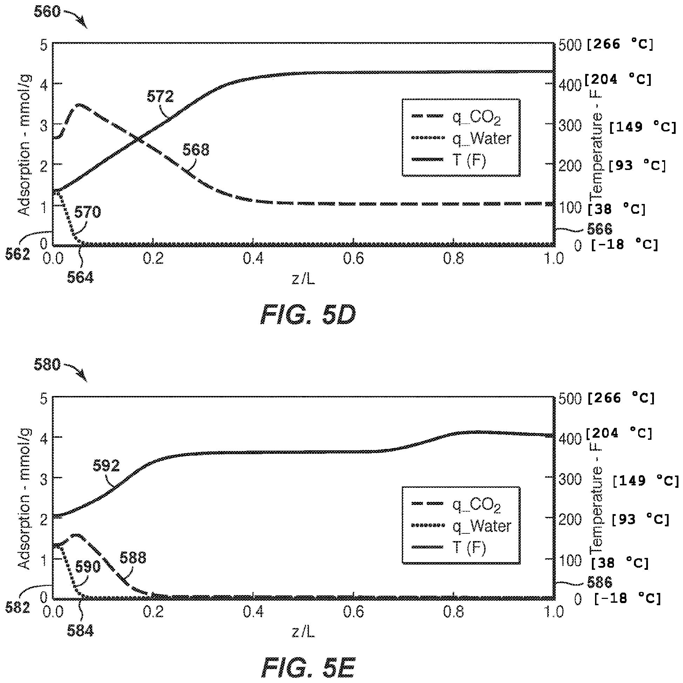

Figures 5A, 5B, 5C, 5D and 5E are exemplary diagrams **500**, **520**, **540**, **560** and **580** associated with the configuration in Figure 4 in accordance with an embodiment of the present techniques. These diagrams **500**, **520**, **540**, **560** and **580** further describe different properties associated with the adsorbent bed in the adsorbent bed unit **406** of Figure 4 and the timing of the steps in an exemplary cycle of the swing adsorption process. In particular, Figure 5A is a diagram **500** of a temperature response **508** and a pressure response **510** for various steps in a cycle. Figures 5B, 5C, 4D and 5E are respective diagrams **520**, **540**, **560** and **580** illustrating the adsorption water (H₂O) content, adsorption carbon dioxide (CO₂) content and temperature responses along the normalized bed length for different time and different steps in the cycle of diagram **500.**

Figure 5A is a diagram **500** of a pressure response **510** shown along a pressure axis 502 in bars with respect to a time axis **504** in seconds (s) and a temperature response **508** shown along a temperature axis **506** in degrees Fahrenheit (°F) [°C] with respect to the time axis **504.** In this diagram, the responses **508** and **510** are shown for different steps in the cycle. The exemplary cycle for the adsorbent bed unit **406** may include performing an adsorption step and a regeneration step, with the regeneration step including a blowdown step, a heating step and a purge step. In particular, the blowdown step is the time period from zero seconds to fourteen seconds, the heating step is from fourteen seconds to fifty-one seconds, the purge step is from fifty-one seconds to sixty-eight seconds and the adsorption step is from sixty-eight seconds to ninety seconds. As shown by the temperature response **508** during the cycle, the temperature increases from the feed temperature of about 85 °F (29.4 °C) during the heating step to a heating temperature of about 385 °F (196.1 °C), which is about the temperature that the purge step is performed, and decreases during the adsorption step to the feed temperature of about 85 °F (29.4 °C). Similarly, the pressure response **510** during the cycle increases during the adsorption step to the feed pressure and decreases in the regenerations steps to the purge pressure.

Figure 5B is a diagram **520** of CO₂ adsorption response **528**, water adsorption response **530**, and temperature response **532** shown along the bed length at time of 0 seconds into the cycle (e.g., at the end of the adsorption step and prior to the blowdown step). In this diagram **520**, the CO₂ adsorption response **528** and water adsorption response **530** are shown along an adsorption axis **522** in millimoles per gram (mmol/g) with respect to the bed length axis **524** in normalized bed length (z/L) and the temperature response **532** shown along a temperature axis **526** in °F [°C] with respect to the bed length axis **524.** As shown by the CO₂ adsorption response **528**, the product region near the product end of the adsorbent bed (e.g., portion of the adsorbent bed from greater than 0.8 of the normalized bed length) does not appears to have adsorbed CO₂, while the adsorbed water is limited to the feed region near the feed end (e.g., portion of the adsorbent bed from less than 0.1 of the normalized bed length). Further, the temperature along the normalized length of the adsorbent bed appears to vary from 85 °F (29.4 °C) to 105 °F (40.6 °C).

Figure 5C is a diagram **540** of CO₂ adsorption response **548**, water adsorption response **550**, and temperature response **552** shown along the bed length at time of 14.5 seconds into the cycle (e.g., at the end of the blowdown step and the beginning of the heating step). In this diagram **540**, the CO₂ adsorption response **548** and water adsorption response **550** are shown along an adsorption axis **542** in mmol/g with respect to the bed length axis **544** in z/L and the temperature response **552** shown along a temperature axis **546** in °F [°C] with respect to the bed length axis **544.** As shown by the CO₂ adsorption response **548**, the product region near the product end of the adsorbent bed (e.g., portion of the adsorbent bed from greater than 0.8 of the normalized bed length) does not appears to have adsorbed CO₂, while the adsorbed water is limited to the feed region near the feed end (e.g., portion of the adsorbent bed from less than 0.1 of the normalized bed length). Further, the temperature along the normalized length of the adsorbent bed appears to vary from 35 °F (1.7 °C) to 105 °F (40.6 °C).

Figure 5D is a diagram **560** of CO₂ adsorption response **568**, water adsorption response **570**, and temperature response **572** shown along the bed length at time of 50.75 seconds into the cycle (e.g., at the end of the heating step and the beginning of the purge step). In this diagram **560**, the CO₂ adsorption response **568** and water adsorption response **570** are shown along an adsorption axis **562** in mmol/g with respect to the bed length axis **564** in z/L and the temperature response **572** shown along a temperature axis **566** in °F [°C] with respect to the bed length axis **564.** As shown by the CO₂ adsorption response **568**, the adsorbed CO₂ appears to be higher in the feed region of the adsorbent bed (e.g., portion of the adsorbent bed from less than 0.4 of the normalized bed length), while the adsorbed water is limited to the feed region near the feed end (e.g., portion of the adsorbent bed from less than 0.1 of the normalized bed length). The heating step appears to have increased the amount of adsorbed CO₂ over the entire length of the adsorbent bed. Further, the temperature along the normalized length of the adsorbent bed appears to be vary from 105 °F (40.6 °C) to 410 °F (210 °C), which is based on the position in the adsorbent bed.

From this diagram **560**, the temperature response **572** indicates that the heating step does not raise the temperature of the entire adsorbent bed to the same temperature. The product end of the adsorbent bed is at a temperature of about 410 °F (210 °C) and the feed end of the adsorbent bed is at a temperature of about 105 °F (40.6 °C). The resulting temperature differential between the feed end and the product end of the adsorbent bed is about 305 °F (169.4 °C) (e.g., 410 °F minus 105 °F (210 °C minus 40.6 °C)). The heating feed region is from the feed end of the adsorbent bed to 0.05 of the normalized bed length, the heating product region is from the product end of the adsorbent bed to 0.4 of the normalized bed length and the heating front region is from 0.05 of the normalized bed length to the 0.4 of the normalized bed length.

Figure 5E is a diagram **580** of CO₂ adsorption response **588**, water adsorption response **590**, and temperature response **592** shown along the bed length at time of 68.75 seconds into the cycle (e.g., at the end of the purge step and the beginning of the adsorption step). In this diagram **580**, the CO₂ adsorption response **588** and water adsorption response **590** are shown along an adsorption axis **582** in mmol/g with respect to the bed length axis **584** in z/L and the temperature response **592** shown along a temperature axis **586** in °F [°C] with respect to the bed length axis **584.** As shown by the CO₂ adsorption response **588**, the adsorbed CO₂ appears to be higher in the feed region of the adsorbent bed (e.g., portion of the adsorbent bed from less than 0.2 of the normalized bed length), while the adsorbed water is limited to the feed region near the feed end (e.g., portion of the adsorbent bed from less than 0.1 of the normalized bed length). Further, the temperature along the normalized length of the adsorbent bed appears to be vary from 210 °F (98.9 °C) to 405 °F (207.2 °C).

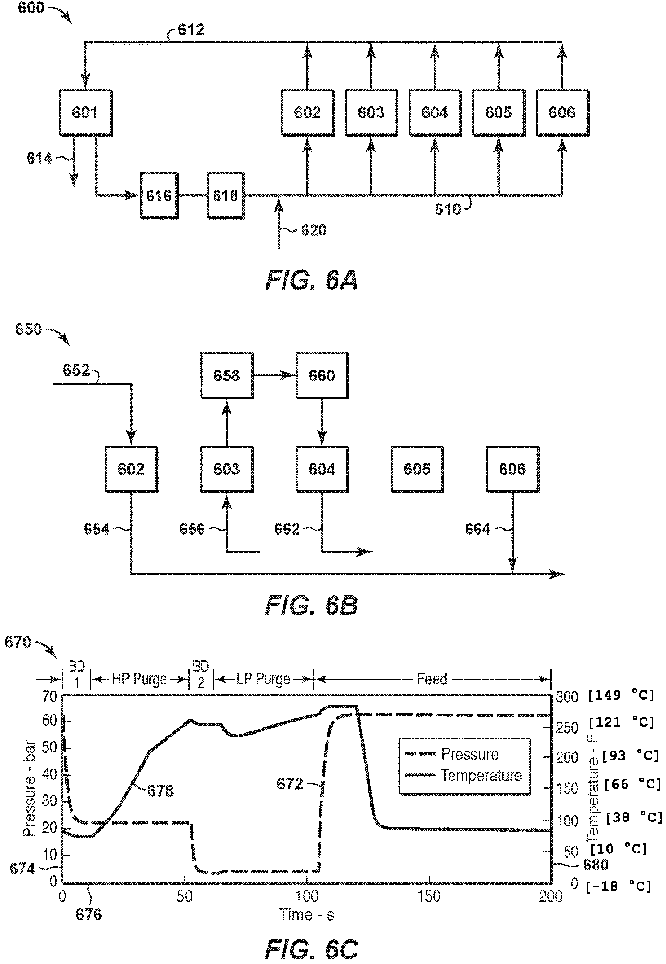

Figure 6A is an exemplary diagram of a heating system **600** forming a heating loop and associated adsorbent bed units **602**, **603**, **604**, **605**, and **606** in accordance with an embodiment of the present techniques. This heating loop may be used to heat the adsorbent beds within the respective adsorbent bed units **602**, **603**, **604**, **605**, and **606**. During this cycle, one or more of the adsorbent bed units **602**, **603**, **604**, **605**, and **606** may be provided the heating stream, which is at a heating temperature and a heating pressure.

To operate, the heating loop may include a storage tank **601**, heating unit **618** and blower **616**, which are connected together with conduits and manifolds, such as conduits **610** and **612** to provide a fluid flow path through the adsorbent bed units **602**, **603**, **604**, **605**, and **606.** The storage tank **601** may be a storage vessel that has a housing forming an interior region. The storage tank **601** may be configured to receive heating fluid from the adsorbent bed unit, to contain a volume of the heating fluid for the heating stream, to provide heating fluid to the heating unit **618** and provide a portion of the heating fluid for fuel gas via conduit **614.** The heating unit **618** may be a furnace and/or a heat exchanger, which is configured to receive the heating stream from the storage tank **601**, to heat the heating fluid, such that the heating fluid may be provided to the respective adsorbent bed units **602**, **603**, **604**, **605**, and **606** at the heating temperature; and output the heating stream to the blower **616.** The blower **616** may be a compressor or other component that may convey the heating stream through the adsorbent bed units. The blower may be configured to increase the pressure of the heating stream, such that the heating stream may utilize pressure differentials to pass through adsorbent bed units **602**, **603**, **604**, **605**, and **606**.

During the heating step, the heating stream is passed from the storage tank **601** to the heating unit **618** to increase the temperature of the heating stream. Then, the heated stream is passed from the heating unit **618** to the blower **616**, which is configured to increase the pressure of the heating stream. From the blower **616**, the heating stream passes through the conduit **610** to one or more of the adsorbent bed units **602**, **603**, **604**, **605**, and **606** at the heating temperature. From the respective adsorbent bed units **602**, **603**, **604**, **605**, and **606**, the stream is provided to the storage tank **601** via conduit **612.**

During the heating step, the heating stream is passed from the storage tank **601** to the heating unit **618** to increase the temperature of the heating stream. Then, the heated stream is passed from the heating unit **618** to the blower **616**, which is configured to increase the pressure of the heating stream. From the blower **616**, the heating stream passes through the conduit **610** and is combined with the purge stream via conduit **620** prior to being provided to one or more of the adsorbent bed units **602**, **603**, **604**, **605**, and **606** at the heating temperature. From the respective adsorbent bed units **602**, **603**, **604**, **605**, and **606**, the stream is provided to the storage tank **601** via conduit **612**. To maintain the mass balance in the heating loop, a portion of the stream from the adsorbent bed units **602**, **603**, **604**, **605**, and **606** is passed to fuel sales.

In an alternative configuration, the heating step may involve heating a portion of the adsorbent bed within the adsorbent bed unit. For example, the portion of the adsorbent bed that is heated may be from the product end of the adsorbent bed to 80% of the bed length, from the product end of the adsorbent bed to 60% of the bed length or from the product end of the adsorbent bed to 40% of the bed length. In this configuration, an electrical heating unit may be used to heat the metal substrate in the adsorbent bed or the specific portion of the adsorbent bed that is to be heated may be heated by a heating stream. In the later configuration, the adsorbent bed may include a gap or break in the adsorbent bed unit at the desired location (heating location) along the adsorbent bed's length. One or more valves may be used to introduce the heating stream to the adsorbent bed at the heating location and pass the heating stream from the heating location to the product end of the adsorbent bed.

While feed streams having CO₂ content may be in the range 20,000 ppm and 5,000 ppm, a separate heating loop and heating step may be involved in the form of the heating loop, as noted above. However, at low CO₂ concentrations, the configuration may involve a modified heating loop that is a double purge configuration. This configuration may be useful for feed streams having low CO₂ concentrations of less than 2,000 ppm or less than 400 ppm, for example. By way of example, the gaseous feed stream may include hydrocarbons and CO₂, wherein the CO₂ content is in the range of one hundred parts per million volume and less than or equal to about 5 molar % of the gaseous feed stream or in the range of two hundred parts per million volume and less than or equal to about 2 molar % of the gaseous feed stream. The heating step may also provide some additional purge by removing one or more contaminants from the adsorbent bed.

Figure 6B is another exemplary diagram of a heating system **650** having a modified heating loop that provides a dual purge configuration for the associated adsorbent bed units **602**, **603**, **604**, **605**, and **606** in accordance with an embodiment of the present techniques. The modified heating loop may be used to heat and purge the adsorbent beds within the respective adsorbent bed units **602**, **603**, **604**, **605**, and **606** in different steps in a cycle.

The modified heating loop may include performing a dual purge with different variations for the process. For example, the process may one or more blowdown steps, two or more purge steps (e.g., may be referred to as the heating step or used to heat the adsorbent beds), and a repressurize step. A specific example is shown with reference to Figure 6B. In this diagram **650**, the adsorbent bed units **602**, **603**, **604**, **605**, and **606** are performing the different steps in a cycle. The adsorbent bed unit **602** is performing an adsorption step that involves passing the feed stream from a conduit **652** through the adsorbent bed in adsorbent bed unit **602** to the conduit **654.** The operation of this step may be similar to the previous process as noted above. The performance of the blowdown step is shown by adsorbent bed unit **606**, which has the blowdown stream passed into the conduit **664** and then mixed with the stream in conduit **654.** Then, a heating step may be performed with the purge stream. For this dual purge configuration, the purge stream is through a first adsorbent bed as a final purge step and then through a second adsorbent bed as an initial purge step. This dual purge is shown as the purge stream is passed through adsorbent bed unit **603** from conduit **656** and to compressor unit **658** and then the compressed stream is passed to a heating unit **660** prior to passing to the second adsorbent bed in adsorbent bed unit **604**, then to a conduit **662.** The heating with heated recycled purge stream, which is the initial purge stream, is sourced from the outlet purge stream of another adsorbent bed, such as adsorbent bed unit **603** and contains the CO₂ removed from the previous adsorbent bed. The stream may or may not be compressed to a higher pressure and/or heated (e.g., may bypass the compressor unit **658** and the heating unit **660**). Also, if additional heat is necessary, the stream may be recycled or additional heating units may be utilized within the purge stream. The final purge stream (e.g., the clean methane stream from the LNG flash gas similar to the purge step in the process above of Figure 4) may include small amounts or no CO₂. The adsorbent bed unit **605** may be in a hold step. While not shown, one additional step may be the repressurize step that is involved in placing the adsorbent bed into service or the adsorbent step. Further, in certain embodiments, the purge product stream may recycled or may be used as a purge stream for another adsorbent bed. The temperature of the heating loop leaving the adsorbent bed is lower than the heating loop inlet temperature by at least 50 °F (27.8 °C).

Figure 6C is a diagram **670** of a pressure response **672** shown along a pressure axis **674** in bars with respect to a time axis **676** in seconds (s) and a temperature response **678** shown along a temperature axis **680** in degrees Fahrenheit (°F) [°C] with respect to the time axis **676.** In this diagram, the responses **672** and **678** are shown for different steps in the cycle. The exemplary cycle for the adsorbent bed unit, which may be one of the adsorbent bed units **602**, **603**, **604**, **605**, and **606** of Figure 6B, may include performing an adsorption step and a regeneration step, with the regeneration step including a first blowdown step, a first purge step, a second blowdown step and a second purge step, which are performed in a cycle having a duration of 200 seconds.

This cycle is for a feed stream with 2,000 ppm CO₂. For these lower CO₂ concentrations, the adsorption step may be performed for longer durations due to more adsorbent capacity due to less CO₂ to adsorb. As this configuration is for multiple adsorbent bed units, two adsorbent bed units may be receiving the feed stream at the same time. The longer adsorption steps may result in less frequent heating of the adsorbent bed units, which also results in less heating gas as a percentage of feed. In the dual purge configuration, each adsorbent bed unit is subjected to two purge steps, which are a high pressure purge step and a low pressure purge step. The high pressure purge stream for the high pressure purge step is obtained from the outlet purge stream (e.g., vent gas) of the lower pressure purge step, so the high pressure purge stream is performed with "dirty" gas which may contain about 4 molar % CO₂. The high pressure purge step is utilized to heat the adsorbent bed. After the high pressure purge step, the pressure in the adsorbent bed is decreased further and subjected to the low pressure "clean" purge which comes from LNG flash and/or BOG gas. The low pressure purge regenerates the adsorbent bed as the final purge stream. Beneficially, the dual purge configuration may not involve additional heaters or compressors.

Figure 7 is another exemplary diagram of a system **700** for treating of a feed stream to form a liquefied natural gas (LNG) stream in accordance with an embodiment of the present techniques. In this system **700**, the pipeline gas stream may be dehydrated using an adsorbent bed unit for the dehydration, such as dehydration adsorbent bed unit **702**, which is in fluid communication with the adsorbent bed unit **406**, which is configured to remove a portion of the CO₂. The adsorbent bed units **702** and **406** may be used to perform rapid cycle swing adsorption processes, which may involve passing various streams through the adsorbent bed units **702** and **406.** As part of this process, a heating step via a heating loop **410** may be used along with a purge step to remove contaminants from the adsorbent beds within the respective adsorbent bed units **406** and **702**. As may be appreciated, the dehydration adsorbent bed unit **702** and adsorbent bed unit **406** may include multiple units to perform the processes in the respective units. Further, the dehydration adsorbent bed unit **702** and adsorbent bed unit **406** may each operate with different cycles, which involve adsorption steps and regenerations steps in the respective cycles. Also, as certain equipment or units are similar to those in Figures 3 and 4, the equipment and units are referenced by the same reference character in this system **700.**

In this system, the process begins at a mercury removal unit **302**, which receives an input stream and separates mercury from the input stream. The output stream from the mercury removal unit **302** is provided via conduit **304** to a filter unit **402**, which is configured to remove any particular matter from the stream. The output stream from the filter unit **402** is the feed stream to the dehydration adsorbent bed unit **702**, during its adsorption step. The dehydration adsorbent bed unit **702** includes a housing having an adsorbent material disposed within the housing, which may be one of the adsorbent bed units noted above in Figures 1 and 2. During the adsorption step, the dehydration adsorbent bed unit **702** is configured to lower the water content of the stream to less than 0.1 ppm water by adsorbing the water from the stream into the adsorbent material and passing the remaining portion of the stream out of the adsorbent material and the unit. The dehydrated stream from the dehydration adsorbent bed unit **702** is provided to the swing adsorbent bed unit **406** during its adsorption step, which may be handled in a manner similar as noted above in the discussion of Figure 4. Following the removal of contaminants in units **402**, **702** and **406**, the LNG feed stream is subjected to LNG processing in the heat exchanger **312**, LNG processing unit **314** and fuel gas compressor unit **318** in manner similar to the discussion of Figure 4 above. The processing results, in a liquefied natural gas stream, are provided via conduit **316** and a flash fuel stream is provided to the fuel gas compressor unit **318.**

In this configuration, the system **700** includes a purge step that is combined with a heating step as part of the regeneration step in the cycle for the adsorbent bed unit **406.** The purge stream is formed from the output from the fuel gas compressor unit **318**, which may be combined with a boil off gas stream from conduit **408** and passed to the adsorbent bed unit **406** during the purge step of the cycle as the purge gas. The heating stream is formed as a portion of the output stream from the adsorbent bed unit **406** is separated into heating loop **410**, which passes through a storage unit **411**, a heating unit **412** and a blower **414**, which operate in a manner similar to that described in Figure 4 above. The remaining portion of the stream from the adsorbent bed unit **406** and the heated portion that is passed through and outputted from the adsorbent bed unit **406** are combined and passed to the conditioning unit **704.** The conditioning unit **704** may be used to heat the combined stream for regeneration of the dehydration adsorbent bed unit **702** and may also be utilized to increase the pressure of the combined stream. In particular, the conditioning unit **704** may be a heat exchanger or a furnace coupled with a compressor (e.g., a standalone compressor or one stage in the fuel gas compressor unit **318**). The output from the conditioning unit **704** is passed to the dehydration adsorbent bed unit **702** for its regeneration step. The stream heats the adsorbent bed of the dehydration adsorbent bed unit **702** to remove water from the adsorbent bed. The output stream from the dehydration adsorbent bed unit **702** during the purge step exits dehydration adsorbent bed unit **702** and is passed to the heat exchanger unit **418.** The heat exchanger unit **418** adjusts the temperature of the stream and the resulting stream may be provided as the process fuel gas stream in conduit **422.**

Figure 8 is yet another exemplary diagram of a system **800** for treating of a feed stream to form a liquefied natural gas (LNG) stream in accordance with an embodiment of the present techniques. In this system **800**, an integrated rapid cycle swing adsorption process is used to dehydrate and remove CO₂ from the pipeline gas stream to form a stream that complies with LNG specifications. In particular, the input stream (e.g., pipeline gas stream) may be dehydrated and have the CO₂ removed by using an adsorbent bed unit **802.** The adsorbent bed unit **802** may be used to perform a rapid cycle swing adsorption processes, which may involve passing various streams through the adsorbent bed unit **802.** As part of this process, a heating step via a heating loop **410** may be used along with a purge step to remove contaminants from the adsorbent bed within the adsorbent bed unit **802.** As may be appreciated, the adsorbent bed unit **802** may include multiple units to perform the processes. Further, the adsorbent bed unit **802** may operate with a cycle, which involve adsorption steps and regenerations steps. Also, as certain equipment or units are similar to those in Figures 3 and 4, the equipment and units are referenced by the same reference character in this system **800.**

In this system, the process begins at a mercury removal unit **302**, which receives an input stream and separates mercury from the input stream, and filter unit **402**, which receives the stream via conduit **304** and is configured to remove any particular matter from the stream. The output stream from the filter unit **402** is the feed stream to the adsorbent bed unit **802**, during its adsorption step. The adsorbent bed unit **802** includes a housing having an adsorbent material disposed within the housing, which may be one of the adsorbent bed units noted above in Figures 1 and 2. The adsorbent bed may include an adsorbent material that is configured to have a higher selectivity to water and CO₂ and/or may include two or more adsorbent materials, with each having a higher selectivity to water or CO₂. During the adsorption step, the adsorbent bed unit **802** is configured to lower the water content of the stream to less than 0.1 ppm water by adsorbing the water from the stream into the adsorbent bed; to lower the CO₂ content of the stream to less than 50 ppm by adsorbing the CO₂ from the stream into the adsorbent bed; and to pass the remaining portion of the stream out of the adsorbent bed and the unit. The decontaminated stream from the adsorbent bed unit **802** is provided as the LNG feed stream to the heat exchanger **312**, LNG processing unit **314** and fuel gas compressor unit **318**, which may operate in manner similar to the discussion of Figure 4 above. The processing results, in a liquefied natural gas stream are provided via conduit **316** and a flash fuel stream is provided to the fuel gas compressor unit **318.**

In this configuration, the system **800** includes a purge step that is combined with a heating step as part of the regeneration step in the cycle for the adsorbent bed unit **802.** The purge stream is formed from the output from the fuel gas compressor unit **318**, which may be combined with a boil off gas stream from conduit **408** and passed to the adsorbent bed unit **802** during the purge step of the cycle as the purge gas. The heating stream is formed as a portion of the output stream from the adsorbent bed unit **802** is separated into the heating loop **410**, which passes through a storage unit **411**, a heating unit **412** and a blower **414**, which operate in a manner similar to that described in Figure 4 above. The remaining portion of the stream from the adsorbent bed unit **802** and the heated portion that is passed through and outputted from the adsorbent bed unit **802** are combined and passed to the heat exchanger unit **418.** The heat exchanger unit **418** adjusts the temperature of the stream and the resulting stream may be provided as the process fuel gas stream in conduit **422.**

In one or more embodiments, the material may include an adsorbent material supported on a non-adsorbent support. The adsorbent materials may include alumina, microporous zeolites, carbons, cationic zeolites, high silica zeolites, highly siliceous ordered mesoporous materials, sol gel materials, aluminum phosphorous and oxygen (ALPO) materials (microporous and mesoporous materials containing predominantly aluminum phosphorous and oxygen), silicon aluminum phosphorous and oxygen (SAPO) materials (microporous and mesoporous materials containing predominantly silicon aluminum phosphorous and oxygen), metal organic framework (MOF) materials (microporous and mesoporous materials comprised of a metal organic framework) and zeolitic imidazolate frameworks (ZIF) materials (microporous and mesoporous materials comprised of zeolitic imidazolate frameworks). Other materials include microporous and mesoporous sorbents functionalized with functional groups. Examples of functional groups include primary, secondary, tertiary amines and other non protogenic basic groups such as amidines, guanidines and biguanides.

In one or more embodiments, the adsorbent bed unit may be utilized to separate contaminants from a feed stream. The method may include passing a gaseous feed stream at a feed pressure through an adsorbent bed unit having an adsorbent contactor to separate one or more contaminants from the gaseous feed stream to form a product stream, wherein the adsorbent contactor has a first portion and a second portion; interrupting the flow of the gaseous feed stream; performing a depressurization step, wherein the depressurization step reduces the pressure within the adsorbent bed unit; performing a heating step, wherein the heating step increases the temperature of the adsorbent bed unit to form a temperature differential between the feed end of the adsorbent bed and the product end of the adsorbent bed; and performing a purge step, wherein the purge step reduces the pressure within the adsorbent bed unit; performing a re-pressurization step, wherein the re-pressurization step increases the pressure within the adsorbent bed unit; and repeating the steps a) to e) for at least one additional cycle.

Further, in one or more embodiments, the adsorbent bed unit may include an adsorbent bed that can be used for the separation of a target gas form a gaseous mixture. The adsorbent is usually comprised of an adsorbent material supported on a non-adsorbent support, or contactor. Such contactors contain substantially parallel flow channels wherein 20 volume percent, preferably 15 volume percent or less of the open pore volume of the contactor, excluding the flow channels, is in pores greater than about 20 angstroms. A flow channel is taken to be that portion of the contactor in which gas flows, if a steady state pressure difference is applied between the point or place at which a feed stream enters the contactor and the point or place at which a product stream leaves the contactor. In the contactor, the adsorbent is incorporated into the wall of the flow channel.

In one or more embodiments, when using RCTSA the total cycle times are typically less than 600 seconds, preferably less than 180 seconds, more preferably less than 90 seconds, and even more preferably less than 60 seconds. In other embodiments, the rapid cycle swing adsorption process may have a total cycle times less than 600 seconds, preferably less than 180 seconds, more preferably less than 90 seconds, and even more preferably less than 60 seconds.

In view of the many possible embodiments to which the principles of the disclosed invention may be applied, it should be recognized that the illustrative embodiments are only preferred examples of the invention and should not be taken as limiting the scope of the invention.

## Claims

1. A process for removing contaminants from a gaseous feed stream, the process comprising:
a) performing one or more adsorption steps, wherein each of the one or more adsorption steps comprise passing a gaseous feed stream through an adsorbent bed unit (406) having an adsorbent bed to separate one or more contaminants from the gaseous feed stream to form a product stream;
b) performing one or more depressurization steps, wherein the pressure within the adsorbent bed unit (406) is reduced by a predetermined amount with each successive depressurization step;
c) performing a heating step, wherein the heating step comprises passing a heating stream at a heating temperature into the adsorbent bed unit (406), wherein the heating stream is passed in a countercurrent direction relative to the direction of the feed stream and the heating temperature is less than 500 °F (260 °C), wherein the heating step results in a temperature differential in a range between 50 °F (27.8 °C) and 400 °F (222.2 °C), wherein the temperature differential is the difference in temperatures between a feed end of the adsorbent bed and a product end of the adsorbent bed, wherein passing the heating stream at the heating temperature into the adsorbent bed unit (406) further comprises recycling the heating stream through the adsorbent bed via a heating loop (410), wherein the heating stream is passed to a heating unit (412) to increase the temperature of the heating stream prior to passing the heating stream at the heating temperature into the adsorbent bed unit (406), and wherein the heating loop includes a blower (414) in fluid communication with the heating unit to increase the pressure of the heating stream prior to passing the heating stream to the adsorbent bed unit (406);
d) performing a purge step, wherein the purge step comprises passing a purge stream into the adsorbent bed unit (406), wherein the purge stream is passed in a countercurrent direction relative to the direction of the feed stream; and
e) repeating the steps a) to d) for at least one additional cycle, wherein the cycle duration is for a period greater than 1 second and less than 600 seconds;
wherein the process further comprises:
passing the product stream from the adsorbent bed unit (406) to a liquefied natural gas process unit (314);
separating a flash fuel stream from the product stream in the liquefied natural gas process unit (314); and
combining a portion of the heating stream with the outlet purge stream that is passed through the adsorbent bed unit (406) to provide a process fuel gas stream (422),
wherein the purge stream is provided from one of a portion of the flash fuel stream or a combination of a portion of the flash fuel stream with a boil off gas stream.

2. The process of claim 1, wherein the temperature differential is in a range between 125 °F (69.4 °C) and 350 °F (194.4 °C), preferably between 175 °F (97.2 °C) and 300 °F (166.7 °C).

3. The process of any one of claims 1 to 2, wherein the gaseous feed stream is a hydrocarbon containing stream having greater than one volume percent hydrocarbons based on the total volume of the feed stream, preferably the gaseous feed stream further comprises CO₂, wherein the CO₂ content is in the range of one hundred parts per million volume and less than or equal to about 5 volume % of the gaseous feed stream.

4. The process of any one of claims 1 to 3, wherein the one or more contaminants include carbon dioxide (CO₂) and the adsorbent bed unit (406) is configured to lower the carbon dioxide (CO₂) level to less than 50 parts per million.

5. The process of any one of claims 1 to 4, wherein the gaseous feed stream is provided at a feed pressure in the range between 50 bar absolute (bara) and 150 bara and at a feed temperature in the range between -40 °F (-40 °C) and 200 °F (93.3 °C).

6. The process of any one of claims 1 to 5, wherein passing the heating stream comprises heating a portion of the adsorbent bed from a product end of the adsorbent bed to 40% of the bed length to the within 10% of the heating temperature.

7. The process of any one of claims 1 to 6, further comprising:
passing an input stream to a dehydration adsorption unit (404); and
adsorbing a portion of the H₂O from the input stream during an adsorption step, wherein the remaining portion of the input stream is the gaseous feed stream; and
conducting away a portion of the H₂O from the dehydration adsorption unit (404) during a regeneration step.

8. The process of any one of claims 1 to 7, further comprising:
passing the product stream from the adsorbent bed unit (406) to a liquefied natural gas process unit (314); and
separating a flash fuel stream from the liquefied natural gas process unit (314) to be utilized as at least a portion of the purge stream, wherein the flash fuel stream from the liquefied natural gas process unit (314) is combined with a boil off gas stream to form the purge stream.

9. The process of any one of claims 1 to 8, wherein the cycle duration is greater than 2 seconds and less than 300 seconds.

10. A system for removing contaminants from a gaseous feed stream, the system comprising:
an adsorbent bed unit (406) configured to separate contaminants from a gaseous feed stream and to output a product stream, wherein the adsorbent bed unit (406) comprises an adsorbent bed;
a liquefied natural gas process unit (314) in fluid communication with the adsorbent bed unit (406) and configured to receive the product stream and separate the product stream into a final product stream and a flash fuel stream; and
one or more purge units in fluid communication with the liquefied natural gas process unit (314) and configured to provide a purge stream to the adsorbent bed unit (406), wherein the purge stream is provided from one of a portion of the flash fuel stream or a combination of a portion of the flash fuel stream with a boil off gas stream and ;
a heating mechanism in fluid communication with the adsorbent bed unit (406), wherein the heating mechanism is a heating loop that includes a heating unit (412) configured to heat the heating stream prior to passing the heating stream to the adsorbent bed unit (406), wherein the heating loop includes a blower (414) in fluid communication with the heating unit and configured to increase the pressure of the heating stream prior to passing the heating stream to the adsorbent bed unit (406), and wherein the heating mechanism is configured to:
pass a heating stream at a heating temperature into the adsorbent bed unit (406) to create a temperature differential in a range between 50 °F (27.8 °C) and 400 °F (222.2 °C), wherein the temperature differential is the difference in temperatures between a feed end of the adsorbent bed and a product end of the adsorbent bed; and
combine a portion of the heating stream with the outlet purge stream that is passed through the adsorbent bed unit (406) to provide a fuel gas stream (422).

11. The system of claim 10, further comprising a dehydration adsorption unit (404) in fluid communication with the adsorbent bed unit (406) and configured to receive an input stream and form the gaseous feed stream, wherein the dehydration adsorption unit (404) is configured to adsorb a portion of the H₂O from the input stream during an adsorption step, wherein the remaining portion of the input stream is the gaseous feed stream; and to conduct away a portion of the H₂O from the dehydration adsorption unit (404) during a regeneration step.

12. The system of claim 11, wherein the dehydration adsorption unit (404) is a molecular sieve adsorption unit or an adsorbent bed unit (406) configured to perform a rapid cycle thermal swing adsorption process, wherein the rapid cycle swing adsorption process has total cycle times less than 600 seconds.

13. The system of any one of claims 10 to 12, wherein the one or more purge units comprise one or more compressors (318) configured to compress one of the flash fuel stream, a boil off gas stream, and any combination thereof.

## Patentansprüche

1. Verfahren zum Entfernen von Verunreinigungen aus einem gasförmigen Einsatzmaterialstrom, bei dem
a) ein oder mehrere Adsorptionsschritte durchgeführt werden, wobei jeder des einen oder der mehreren Adsorptionsschritte Leiten eines gasförmigen Einsatzmaterialstroms durch eine Adsorbensbetteinheit (406) mit einem Adsorbensbett umfasst, um eine oder mehrere Verunreinigungen aus dem gasförmigen Einsatzmaterialstrom abzutrennen, um einen Produktstrom zu bilden,
b) ein oder mehrere Druckentlastungsschritte durchgeführt werden, wobei der Druck innerhalb der Adsorbensbetteinheit (406) mit jedem aufeinander folgenden Druckentlastungsschritt um einen vorbestimmten Betrag reduziert wird,
c) ein Heizschritt durchgeführt wird, wobei der Heizschritt Leiten eines Heizstroms mit einer Heiztemperatur in die Adsorbensbetteinheit (406) umfasst, wobei der Heizstrom in einer Gegenstromrichtung relativ zu der Richtung des Einsatzmaterialstroms geleitet wird und die Heiztemperatur weniger als 260°C (500°F) beträgt, wobei der Heizschritt zu einem Temperaturdifferenzial in einem Bereich zwischen 27,8°C (50°F) und 222,2°C (400°F) führt, wobei das Temperaturdifferenzial die Differenz der Temperaturen zwischen einem Einsatzmaterialende des Adsorbensbettes und einem Produktende des Adsorbensbettes ist, wobei Leiten des Heizstroms bei der Heiztemperatur in die Adsorbensbetteinheit (406) des Weiteren Rückführung des Heizstroms durch das Adsorbensbett hindurch mittels einer Heizschleife (410) umfasst, wobei der Heizstrom in eine Heizeinheit (412) geleitet wird, um die Temperatur des Heizstroms zu erhöhen, bevor der Heizstrom bei der Heiztemperatur in die Adsorbensbetteinheit (406) geleitet wird, und wobei die Heizschleife ein Gebläse (414) in Fließverbindung mit der Heizeinheit einschließt, um den Druck des Heizstroms vor dem Leiten des Heizstroms zu der Adsorbensbetteinheit (406) zu erhöhen,
d) ein Säuberungsschritt durchgeführt wird, wobei der Säuberungsschritt Leiten eines Säuberungsstroms in die Adsorbensbetteinheit (406) umfasst, wobei der Säuberungsstrom in einer Gegenstromrichtung relativ zu der Richtung des Einsatzmaterialstroms geleitet wird, und
e) die Schritte a) bis d) für mindestens einen zusätzlichen Zyklus wiederholt werden, wobei die Zyklusdauer für einen Zeitraum größer als 1 Sekunde und kleiner als 600 Sekunden ist,
wobei in dem Verfahren des Weiteren
der Produktstrom aus der Adsorbensbetteinheit (406) zu einer Verfahrenseinheit (314) für Flüssigerdgas geleitet wird,
ein Flash-Brennstoffstrom von dem Produktstrom in der Verfahrenseinheit (314) für Flüssigerdgas abgetrennt wird, und
ein Anteil des Heizstroms mit dem Ausgangssäuberungsstrom kombiniert wird, der durch die Adsorbensbetteinheit (406) hindurch geleitet wird, um einen Prozessbrennstoffgasstrom (422) bereitzustellen,
wobei der Säuberungsstrom von einem von einem Anteil des Flash-Brennstoffstroms oder einer Kombination des Flash-Brennstoffstroms mit einem Absiedegasstrom (Boil-off-Gasstrom) bereitgestellt wird.

2. Verfahren nach Anspruch 1, bei dem das Temperaturdifferenzial in einem Bereich zwischen 69,4°C (125°F) und 194,4°C (350°F) liegt, vorzugsweise zwischen 97,2°C (175°F) und 166,7°C (300°F).

3. Verfahren nach einem der Ansprüche 1 bis 2, bei dem der gasförmige Einsatzmaterialstrom ein kohlenwasserstoffhaltiger Strom mit mehr als einem Volumenprozent Kohlenwasserstoffen ist, bezogen auf das Gesamtvolumen des Einsatzmaterialstroms, wobei vorzugsweise der gasförmige Einsatzmaterialstrom des Weiteren CO₂ umfasst, wobei der Gehalt an CO₂ im Bereich von hundert ppm (Teilen pro Million) des Volumens bis kleiner als oder gleich etwa 5 Vol.% des gasförmigen Einsatzmaterialstroms liegt.

4. Verfahren nach einem der Ansprüche 1 bis 3, bei dem die eine oder mehreren Verunreinigungen Kohlendioxid (CO₂) einschließen und die Adsorbensbetteinheit (406) ausgestaltet ist, um das Niveau an Kohlendioxid (CO₂) auf weniger als 50 ppm abzusenken.

5. Verfahren nach einem der Ansprüche 1 bis 4, bei dem der gasförmige Einsatzmaterialstrom mit einem Einsatzmaterialdruck im Bereich zwischen 50 bar absolut (bara) und 150 bara und mit einer Einsatzmaterialtemperatur im Bereich zwischen -40°C (-40°F) und 93,3°C (200°F) bereitgestellt wird.

6. Verfahren nach einem der Ansprüche 1 bis 5, bei dem Leiten des Heizstroms Heizen eines Anteils des Adsorbensbettes von einem Produktende des Adsorbensbettes bis 40 % der Bettenlänge auf die, die innerhalb von 10 % der Heiztemperatur ist, umfasst.

7. Verfahren nach einem der Ansprüche 1 bis 6, bei dem des Weiteren
ein Eingangsstrom zu einer Dehydratisierungsadsorptionseinheit (404) geleitet wird, und
ein Anteil des H₂O während eines Adsorptionsschrittes von dem Eingangsstrom adsorbiert wird, wobei der verbleibende Anteil des Eingangsstroms der gasförmige Einsatzmaterialstrom ist, und
ein Anteil des H₂O während eines Regenerationsschrittes von der Dehydratisierungsadsorptionseinheit (404) weggeführt wird.

8. Verfahren nach einem der Ansprüche 1 bis 7, bei dem des Weiteren der Produktstrom aus der Adsorbensbetteinheit (406) zu einer Verfahrenseinheit (314) für Flüssigerdgas geleitet wird, und ein Flash-Brennstoffstrom von der Verfahrenseinheit (314) für Flüssigerdgas abgetrennt wird, um als mindestens ein Anteil des Säuberungsstroms genutzt zu werden, wobei der Flash-Brennstoffstrom aus der Verfahrenseinheit (314) für Flüssigerdgas mit einem Boil-off-Gasstrom kombiniert wird, um den Säuberungsstrom zu bilden.

9. Verfahren nach einem der Ansprüche 1 bis 8, bei dem die Zyklusdauer größer als 2 Sekunden und kleiner als 300 Sekunden ist.

10. System zum Entfernen von Verunreinigungen aus einem gasförmigen Einsatzmaterialstrom, das folgendes umfasst:
eine Adsorbensbetteinheit (406), die ausgestaltet ist, um Verunreinigungen von einem gasförmigen Einsatzmaterialstrom zu trennen und einen Produktstrom auszugeben, wobei die Adsorbensbetteinheit (406) ein Adsorbensbett umfasst,
eine Verfahrenseinheit (314) für Flüssigerdgas in Fließverbindung mit der Adsorbensbetteinheit (406), und die ausgestaltet ist, um den Produktstrom zu empfangen und den Produktstrom in einen Endproduktstrom und einen Flash-Brennstoffstrom zu trennen, und
eine oder mehrere Säuberungseinheiten in Fließverbindung mit der Verfahrenseinheit (314) für Flüssigerdgas, und ausgestaltet, um der Adsorbensbetteinheit (406) einen Säuberungsstrom bereitzustellen, wobei der Säuberungsstrom von einem von einem Anteil des Flash-Brennstoffstroms oder einer Kombination eines Anteils des Flash-Brennstoffstroms mit einem Boil-off-Gasstrom bereitgestellt wird, und
einen Heizmechanismus in Fließverbindung mit der Adsorbensbetteinheit (406), wobei der Heizmechanismus eine Heizschleife ist, die eine Heizeinheit (412) einschließt, die ausgestaltet ist, um den Heizstrom zu heizen, bevor der Heizstrom zu der Adsorbensbetteinheit (406) geleitet wird, wobei die Heizschleife ein Gebläse (414) in Fließverbindung mit der Heizeinheit einschließt, und ausgestaltet ist, um den Druck des Heizstroms vor dem Leiten des Heizstroms zu der Adsorbensbetteinheit (406) zu erhöhen, und wobei der Heizmechanismus ausgestaltet ist,
damit:
ein Heizstrom mit einer Heiztemperatur in die Adsorbensbetteinheit (406) geleitet wird, um ein Temperaturdifferenzial in einem Bereich zwischen 27,8°C (50°F) und 222,2°C (400°F) zu erzeugen, wobei das Temperaturdifferenzial die Differenz der Temperaturen zwischen einem Einsatzmaterialende des Adsorbensbettes und einem Produktende des Adsorbensbettes ist, und
ein Anteil des Heizstroms mit dem Ausgangssäuberungsstrom kombiniert wird, der durch die Adsorbensbetteinheit (406) hindurch geleitet wird, um einen Brennstoffgasstrom (422) bereitzustellen.

11. System nach Anspruch 10, das des Weiteren eine Dehydratisierungsadsorptionseinheit (404) in Fließverbindung mit der Adsorbensbetteinheit (406) umfasst, und ausgestaltet ist, um einen Eingangsstrom zu empfangen und den gasförmigen Einsatzmaterialstrom zu bilden, wobei die Dehydratisierungsadsorptionseinheit (404) ausgestaltet ist, um während eines Adsorptionsschrittes einen Anteil des H₂O aus dem Eingangsstrom zu adsorbieren, wobei der verbleibende Anteil des Eingangsstroms der gasförmige Einsatzmaterialstrom ist, und um einen Anteil des H₂O während eines Regenerierungsschrittes von der Dehydratisierungsadsorptionseinheit (404) wegzuführen.

12. System nach Anspruch 11, bei dem die Dehydratisierungsadsorptionseinheit (404) eine Molekularsiebadsorptionseinheit oder eine Adsorbensbetteinheit (406) ist, die ausgestaltet ist, um einen Temperaturwechseladsorptionsprozess mit raschem Zyklus durchzuführen, wobei der Temperaturwechseladsorptionsprozess mit raschem Zyklus Gesamtzykluszeiten von weniger als 600 Sekunden aufweist.

13. System nach einem der Ansprüche 10 bis 12, bei dem die eine oder mehreren Säuberungseinheiten einen oder mehrere Kompressoren (318) umfasst/umfassen, der/die ausgestaltet ist/sind, um einen von dem Flash-Brennstoffstrom, einem Boil-off-Gasstrom und jedweder Kombination davon zu komprimieren.

## Revendications

1. Procédé destiné à éliminer des contaminants d'un courant d'alimentation gazeux, le procédé comprenant :
a) la réalisation d'une ou plusieurs étapes d'adsorption, l'étape ou chacune des étapes d'adsorption comprenant l'acheminement d'un courant d'alimentation gazeux à travers une unité à lit d'adsorbant (406) ayant un lit d'adsorbant pour séparer un ou plusieurs contaminants du courant d'alimentation gazeux pour former un courant de produit ;
b) la réalisation d'une ou plusieurs étapes de dépressurisation, la pression à l'intérieur de l'unité à lit d'adsorbant (406) étant réduite d'une quantité prédéterminée avec chaque étape de dépressurisation successive ;
c) la réalisation d'une étape de chauffage, l'étape de chauffage comprenant l'acheminement d'un courant de chauffage à une température de chauffage à l'intérieur de l'unité à lit d'adsorbant (406), le courant de chauffage étant acheminé dans une direction à contre-courant par rapport à la direction du courant d'alimentation et la température de chauffage étant inférieure à 500 °F (260 °C), l'étape de chauffage se soldant par un différentiel de température dans une plage comprise entre 50 °F (27,8 °C) et 400 °F (222,2 °C), le différentiel de température étant la différence de température entre une extrémité d'alimentation du lit d'adsorbant et une extrémité de produit du lit d'adsorbant, l'acheminement du courant de chauffage à la température de chauffage à l'intérieur de l'unité à lit d'adsorbant (406) comprenant en outre le recyclage du courant de chauffage à travers le lit d'adsorbant par le biais d'une boucle de chauffage (410), le courant de chauffage étant acheminé jusqu'à une unité de chauffage (412) pour augmenter la température du courant de chauffage avant l'acheminement du courant de chauffage à la température de chauffage à l'intérieur de l'unité à lit d'adsorbant (406), et la boucle de chauffage comportant une soufflante (414) en communication fluidique avec l'unité de chauffage pour augmenter la pression du courant de chauffage avant l'acheminement du courant de chauffage jusqu'à l'unité à lit d'adsorbant (406) ;
d) la réalisation d'une étape de purge, l'étape de purge comprenant l'acheminement d'un courant de purge à l'intérieur de l'unité à lit d'adsorbant (406), le courant de purge étant acheminé dans une direction à contre-courant par rapport à la direction du courant d'alimentation ; et
e) la répétition des étapes a) à d) sur au moins un cycle supplémentaire, la durée du cycle représentant une période supérieure à 1 seconde et inférieure à 600 secondes ;
le procédé comprenant en outre :
l'acheminement du courant de produit de l'unité à lit d'adsorbant (406) à une unité de transformation en gaz naturel liquéfié (314) ;
la séparation d'un courant de combustible instantané du courant de produit dans l'unité de transformation en gaz naturel liquéfié (314) ; et
la combinaison d'une partie du courant de chauffage avec le courant de purge de sortie qui est acheminé à travers l'unité à lit d'adsorbant (406) pour fournir un courant de gaz combustible de procédé (422),
dans lequel le courant de purge est fourni à partir soit d'une partie du courant de combustible instantané, soit d'une combinaison d'une partie du courant de combustible instantané avec un courant de gaz d'évaporation.

2. Procédé selon la revendication 1, dans lequel le différentiel de température se situe dans une plage comprise entre 125 °F (69,4 °C) et 350 °F (194,4 °C), de préférence entre 175 °F (97,2 °C) et 300 °F (166,7 °C).

3. Procédé selon l'une quelconque des revendications 1 et 2, dans lequel le courant d'alimentation gazeux est un courant contenant des hydrocarbures ayant plus d'un pour cent en volume d'hydrocarbures, rapporté au volume total du courant d'alimentation, de préférence le courant d'alimentation gazeux comprend en outre du CO₂, dans lequel la teneur en CO₂ se situe dans la plage de cent parties par million en volume et est inférieure ou égale à environ 5 % en volume du courant d'alimentation gazeux.

4. Procédé selon l'une quelconque des revendications 1 à 3, dans lequel le ou les contaminants incluent du dioxyde de carbone (CO₂) et l'unité à lit d'adsorbant (406) est configurée pour faire baisser le niveau de dioxyde de carbone (CO₂) à moins de 50 parties par million.

5. Procédé selon l'une quelconque des revendications 1 à 4, dans lequel le courant d'alimentation gazeux est fourni à une pression d'alimentation dans la plage comprise entre 50 bars absolus (bara) et 150 bara et à une température d'alimentation dans la plage comprise entre -40 °F (-40 °C) et 200 °F (93,3 °C).

6. Procédé selon l'une quelconque des revendications 1 à 5, dans lequel l'acheminement du courant de chauffage comprend le chauffage d'une partie du lit d'adsorbant depuis une extrémité de produit du lit d'adsorbant jusqu'à 40 % de la longueur de lit jusque dans les ±10 % de la température de chauffage.

7. Procédé selon l'une quelconque des revendications 1 à 6, comprenant en outre :
l'acheminement d'un courant d'entrée jusqu'à une unité d'adsorption de déshydratation (404) ; et
l'adsorption d'une partie du H₂O issu du courant d'entrée pendant une étape d'adsorption, la partie restante du courant d'entrée étant le courant d'alimentation gazeux ; et
l'éloignement d'une partie du H₂O de l'unité d'adsorption de déshydratation (404) pendant une étape de régénération.

8. Procédé selon l'une quelconque des revendications 1 à 7, comprenant en outre :
l'acheminement du courant de produit de l'unité à lit d'adsorbant (406) à une unité de transformation en gaz naturel liquéfié (314) ; et
la séparation d'un courant de combustible instantané de l'unité de transformation en gaz naturel liquéfié (314) pour qu'il soit utilisé comme au moins une partie du courant de purge, le courant de combustible instantané issu de l'unité de transformation en gaz naturel liquéfié (314) étant combiné avec un courant de gaz d'évaporation pour former le gaz de purge.

9. Procédé selon l'une quelconque des revendications 1 à 8, dans lequel la durée du cycle est supérieure à 2 secondes et inférieure à 300 secondes.

10. Système destiné à éliminer des contaminants d'un courant d'alimentation gazeux, le système comprenant :
une unité à lit d'adsorbant (406) configurée pour séparer des contaminants d'un courant d'alimentation gazeux et pour délivrer un courant de produit, l'unité à lit d'adsorbant (406) comprenant un lit d'adsorbant ;
une unité de transformation en gaz naturel liquéfié (314) en communication fluidique avec l'unité à lit d'adsorbant (406) et configurée pour recevoir le courant de produit et séparer le courant de produit en un courant de produit final et un courant de combustible instantané ; et
une ou plusieurs unités de purge en communication fluidique avec l'unité de transformation en gaz naturel liquéfié (314) et configurées pour fournir un courant de purge à l'unité à lit d'adsorbant (406), le courant de purge étant fourni à partir soit d'une partie du courant de combustible instantané, soit d'une combinaison d'une partie du courant de combustible instantané avec un courant de gaz d'évaporation ; et
un mécanisme de chauffage en communication fluidique avec l'unité à lit d'adsorbant (406), le mécanisme de chauffage étant une boucle de chauffage qui comporte une unité de chauffage (412) configurée pour chauffer le courant de chauffage avant l'acheminement du courant de chauffage jusqu'à l'unité à lit d'adsorbant (406), la boucle de chauffage comportant une soufflante (414) en communication fluidique avec l'unité de chauffage et configurée pour augmenter la pression du courant de chauffage avant l'acheminement du courant de chauffage jusqu'à l'unité à lit d'adsorbant (406), et le mécanisme de chauffage étant configuré pour :
acheminer un courant de chauffage à une température de chauffage à l'intérieur de l'unité à lit d'adsorbant (406) pour créer un différentiel de température dans une plage comprise entre 50 °F (27,8 °C) et 400 °F (222,2 °C), le différentiel de température étant la différence de température entre une extrémité d'alimentation du lit d'adsorbant et une extrémité de produit du lit d'adsorbant ; et
combiner une partie du produit chauffage avec le courant de purge de sortie qui est acheminé à travers l'unité à lit d'adsorbant (406) pour fournir un courant de gaz combustible (422).

11. Système selon la revendication 10, comprenant en outre une unité d'adsorption de déshydratation (404) en communication fluidique avec l'unité à lit d'adsorbant (406) et configurée pour recevoir un courant d'entrée et former le courant d'alimentation gazeux, l'unité d'adsorption de déshydratation (404) étant configurée pour adsorber une partie du H₂O issu du courant d'entrée pendant une étape d'adsorption, la partie restante du courant d'entrée étant le courant d'alimentation gazeux, et pour éloigner une partie du H₂O de l'unité d'adsorption de déshydratation (404) pendant une étape de régénération.

12. Système selon la revendication 11, dans lequel l'unité d'adsorption de déshydratation (404) est une unité d'adsorption à tamis moléculaire ou une unité à lit d'adsorbant (406) configurée pour réaliser un procédé d'adsorption modulée en température à cycle rapide, le procédé d'adsorption modulée en température à cycle rapide ayant des temps totaux de cycle inférieurs à 600 secondes.

13. Système selon l'une quelconque des revendications 10 à 12, dans lequel la ou les unités de purge comprennent un ou plusieurs compresseurs (318) configurés pour comprimer soit le courant de combustible instantané, soit un courant de gaz d'évaporation, soit toute combinaison de ceux-ci.
